(19) Europäisches Patentamt

European Patent Office

Office européen des brevets

(11) **EP 1 503 358 A1**

(12) **EUROPEAN PATENT APPLICATION**

(43) Date of publication:
02.02.2005 Bulletin 2005/05

(51) Int Cl.7: **G08G 1/123**, G06F 17/60

(21) Application number: 04025554.9

(22) Date of filing: 03.07.2003

| | |
|---|---|
| (84) Designated Contracting States:<br>**DE FR GB**<br><br>(30) Priority: **08.07.2002 JP 2002199322**<br>    **08.07.2002 JP 2002199324**<br>    **08.07.2002 JP 2002199326**<br>    **19.03.2003 JP 2003075389**<br><br>(62) Document number(s) of the earlier application(s) in accordance with Art. 76 EPC:<br>**03015120.3 / 1 381 010**<br><br>(71) Applicant: **Honda Giken Kogyo Kabushiki Kaisha Minato-ku, Tokyo (JP)**<br><br>(72) Inventors:<br> • **Ogura, Koichi**<br>   **Minato-ku Tokyo (JP)** | • **Nakamura, Kazuhiro**<br>   **Minato-ku Tokyo (JP)**<br> • **Watanabe, Toshiyasu**<br>   **Minato-ku Tokyo (JP)**<br> • **Otake, Shunsuke**<br>   **Minato-ku Tokyo (JP)**<br><br>(74) Representative:<br>**Herzog, Markus, Dipl.-Phys. Dr. et al**<br>**Weickmann & Weickmann**<br>**Patentanwälte**<br>**Postfach 86 08 20**<br>**81635 München (DE)**<br><br>Remarks:<br>This application was filed on 27 - 10 - 2004 as a divisional application to the application mentioned under INID code 62. |

(54) **Shared vehicle distribution instruction apparatus and vehicle reservation control apparatus**

(57)    A shared vehicle distribution instruction apparatus instructs the movement of shared vehicles between ports appropriately.

When instructions are issued to personnel 8 to move a shared vehicle 2 so that bias does not occur in the number of parked shared vehicles 2 between a plurality of ports, first a vehicle administration apparatus 1a, in order to ascertain accurately an excess or lack status of shared vehicles 2 for each port, estimates the number of shared vehicles 2 parked at each port after a predetermined time, and performs evaluation value calculation processing for assigning a ranking for shared vehicle 2 movement to every port. Next the vehicle administration apparatus 1a determines from which port to which port a shared vehicle 2 should actually be moved by an evaluation value based on the estimated vehicle number, and outputs vehicle movement instructions to an administration server 1 to move the shared vehicle 2 between a movement source and a movement target port. Then, a personnel administration server 1b communicates the shared vehicle 2 movement instruction received from the vehicle administration apparatus 1a to a portable terminal 9 carried by the personnel 8 via a communications network 7.

Fig. 1

EP 1 503 358 A1

**Description**

BACKGROUND OF THE INVENTION

Field of the Invention

The present invention relates to a shared vehicle distribution instruction apparatus used in a shared vehicle system in which a shared vehicle parked in a parking region is lent to a user, which instructs the movement of shared vehicles between parking regions, and a vehicle reservation control apparatus which controls usage reservations made by users for shared vehicles parked in the parking region.

Description of the Related Art

Conventionally, there are shared vehicle systems whereby a shared vehicle parked in a parking region called a port is rented to a user. In such a system, shared vehicles are moved from ports which have an excess number of shared vehicles to ports with a shortage of shared vehicles by personnel attending the port, thereby preventing the occurrence of there being insufficient vehicles to satisfy the usage requests from users. Accordingly, the shared vehicles can be parked such that the convenience for the user is improved, and ports are used effectively (for example, refer to patent reference 1).

Furthermore, in such a shared vehicle system, users can move freely between a plurality of ports at geographically separated locations using a shared vehicle, and ports for parking shared vehicles must therefore be established in various locations. Consequently, such measures as leasing a portion of a standard time based parking garage. for example, as reserved parking facility, and using this as a port, are employed.

Moreover, there are shared vehicle systems whereby a shared vehicle parked in a port, for example, is rented to a user who has made a reservation.

In such a system, generally when there is an empty vehicle (an empty shared vehicle) in the port, or if the use of a shared vehicle currently in use is due to end by the time requested in the reservation request made by the user, a new usage reservation made by a user is accepted, and the usage schedule of the shared vehicle is set.

[Patent Reference 1]

Japanese Unexamined Patent Application, First Publication No. 2001-60294.

However, in such a conventional system, although shared vehicles can be moved from ports which have an excess number of shared vehicles to ports with a shortage of shared vehicles, in cases where the scheduled shared vehicle cannot be secured due to mechanical failure, for example, or in cases where a shared vehicle cannot be secured because the shared vehicle fails to return to the port on time due to traffic congestion or the like, or in cases where the circumstances of a user mean that a shared vehicle is not taken from the port on schedule and is left parked in the port leading to there being more vehicles in the port than it can hold, a specific administration method which determines which shared vehicles should be moved from which port to which port to obtain the optimal distribution of vehicles, despite there being disparity between the actual number of shared vehicles parked in each of the plurality of ports, has not yet been disclosed.

Furthermore, in such a system, there is a problem that if the shared vehicle reserved by a user has not been returned to the port due to the circumstances of the previous user or because of traffic congestion, or when an fault of some kind is found with the shared vehicle itself, for example, the number of shared vehicles which are actually available for use is reduced, and there is a possibility that the lending of vehicles cannot be carried out on schedule.

SUMMARY OF THE INVENTION

The present invention takes the above problems into consideration, with an object of providing a shared vehicle distribution instruction apparatus which instructs the movement of shared vehicles between ports appropriately, and a vehicle reservation control apparatus which controls the usage reservation of shared vehicles in accordance with the number of shared vehicles available for use.

In order to solve the above problems, a shared vehicle distribution instruction apparatus according to a first aspect of the invention is a shared vehicle distribution instruction apparatus which in a shared vehicle system in which shared vehicles (for example shared vehicle 2 in the embodiments) parked in a parking region (for example port 50 in the embodiments) are administered and the shared vehicles are lent to users, issues instructions for the movement of the shared vehicles between a plurality of the parking regions in order to maintain a suitable number of shared vehicles readied at the plurality of parking regions which exist at different geographical locations, comprising: an evaluation value calculation device (corresponding to steps S11 to S18 in the embodiments, for example) which estimates the number of excess shared vehicles or the number of shared vehicles lacking for each parking region after a predetermined time based on the movement records of the shared vehicles, and calculates a first evaluation value (for example the excess vehicle number evaluation value $E_{V-excess}$ in the embodiments) corresponding to the estimated number of excess shared vehicles and calculates a second evaluation value (for example the lacking vehicle number evaluation value $E_{V-lack}$ in the embodiments) corresponding to the number of shared vehicles lacking; and a vehicle movement instruction device (corresponding to steps S21 to S40 in the embodiments, for example) which determines a movement source parking region and a movement target parking region for the shared vehicle based on the first and second evaluation numbers, and issues a vehicle movement instruction to move the shared vehicle from the movement source parking region to the movement target parking region.

In a shared vehicle distribution instruction apparatus having the above construction, the evaluation value calculation device estimates the number of excess shared vehicles or number of shared vehicles lacking after a predetermined time for each parking region, evaluates the number of parked shared vehicles using the number of excess shared vehicles and the number of shared vehicles lacking, and calculates the degree of necessity of vehicle movement for each parking region as a numerical value called an evaluation value. Moreover the vehicle movement instruction device determines the movement source parking region and the movement target parking region based on the calculated evaluation values, thereby instructing the movement of shared vehicles between parking regions while appropriately taking into consideration the degree of need for vehicle movement in each parking region.

A shared vehicle distribution instruction apparatus according to a second aspect of the invention is a shared vehicle distribution instruction apparatus according to the first aspect, wherein the vehicle movement instruction device deems the parking region estimated to have the most sufficient number of the shared vehicles based on the first and second evaluation values, the movement source parking region for the shared vehicles, and deems the parking region estimated to be most lacking in the shared vehicles based on the first and second evaluation values, the movement target parking region for the shared vehicles.

In a shared vehicle distribution instruction apparatus with the above construction, the vehicle movement instruction device appropriately evaluates the degree of need for vehicle movement in each parking region based on the first and second evaluation values calculated by the evaluation value calculation device. Therefore the setting of parking regions which appear to be approaching a lack of shared vehicles after a predetermined time as the movement source parking region, and the setting of parking regions which appear to be approaching an excess of shared vehicles after a predetermined time as the movement target parking region, can be prevented.

A shared vehicle distribution instruction apparatus according to a third aspect of the invention is a shared vehicle distribution instruction apparatus according to the first aspect or the second aspect, wherein the vehicle movement instruction device gives priority to the parking regions where personnel who can move the shared vehicles are stationed when setting the movement source parking region.

In a shared vehicle distribution instruction apparatus with the above construction, the movement of shared vehicles can be completed in a shorter time by setting parking regions where personnel are stationed who can move a shared vehicle immediately as the movement source parking region, preferentially over those parking regions which take longer to move shared vehicles because personnel need to be brought in specially to move the shared vehicles.

A shared vehicle distribution instruction apparatus according to a fourth aspect of the invention is a shared vehicle distribution instruction apparatus which in a shared vehicle system in which shared vehicles (for example shared vehicle 2 in the embodiments) parked in a parking region (for example port 50 in the embodiments) are administered and the shared vehicles are lent to users, issues instructions for the movement of the shared vehicles between a plurality of the parking regions in order to maintain a suitable number of parked cars for the shared vehicles readied at the plurality of parking regions which exist at different geographical locations, comprising: an evaluation value calculation device (corresponding to steps S61 to S69 in the embodiments, for example) which sets for each parking region for the number of the parked cars, a first threshold value (for example the determination minimum threshold in the embodiments) indicating a lower limit for determining whether or not vehicle movement is necessary, and a second threshold value (for example the determination maximum threshold in the embodiments) indicating an upper limit for determining whether or not vehicle movement is necessary; and a vehicle movement instruction device (corresponding to steps S71 to S90 in the embodiments, for example) which determines a movement source parking region and a movement target parking region for the shared vehicle based on the evaluated values, and issues a vehicle movement instruction to move the shared vehicle from the movement source parking region to the movement target parking region.

In a shared vehicle distribution instruction apparatus having the above construction, the evaluation value calculation device evaluates the number of parked shared vehicles using the first and second threshold values, and calculates the degree of necessity of vehicle movement for each parking region as a numerical value called an evaluation value, and moreover the vehicle movement instruction device determines the shared vehicle movement source parking region and movement target parking region based on the calculated evaluation values. As a result, the movement of shared vehicles between parking regions can be instructed while appropriately taking into consideration the degree of need for vehicle movement in each parking region.

A shared vehicle distribution instruction apparatus according to a fifth aspect of the invention is a shared vehicle distribution instruction apparatus according to the fourth aspect, wherein the vehicle movement instruction device deems the parking region determined to have the most sufficient number of the shared vehicles based on the evaluation value the movement source parking region for the shared vehicles, and deems the parking region determined to be most lacking in the shared vehicles based on the evaluation value the movement target parking region for the shared vehicles.

In a shared vehicle distribution instruction apparatus with the above construction, the vehicle movement instruction device instructs the movement of shared vehicles from a parking region determined to have the most sufficient number of the shared vehicles to a parking region determined to be most lacking in shared vehicles, based on the calculated evaluation value. As a result, instructions can be issued to appropriately move shared vehicles between the parking regions which have the greatest need for vehicle movement.

A shared vehicle distribution instruction apparatus according to a sixth aspect of the invention is a shared vehicle distribution instruction apparatus according to the fourth aspect, wherein the vehicle movement instruction device sets for each parking region for the number of the parked cars, a third threshold value (for example the vehicle deduction threshold in the embodiments) indicating a lower limit for determining whether or not vehicle movement is possible, and a fourth threshold value (for example the vehicle addition threshold in the embodiments) indicating an upper limit for determining whether or not vehicle movement is possible; deems the parking region which of the parking regions where the number of parked cars exceeds the third threshold value and it is therefore determined to be possible to deduct shared vehicles, is the most sufficient in shared vehicles based on the evaluation values, the movement source parking region for the shared vehicles; and deems the parking region which of the parking regions where the number of parked cars is lower than the fourth threshold value and it is therefore determined to be possible to add shared vehicles, is the most lacking in shared vehicles based on the evaluation values, the movement target parking region for the shared vehicles.

In a shared vehicle distribution instruction apparatus having the above construction, the evaluation value calculation device evaluates appropriately the degree of need for vehicle movement in each parking region based on the first and second threshold values, and the vehicle movement instruction device evaluates the number of parked shared vehicles based on the third and fourth threshold values. Hence the setting of parking regions which look to be approaching a lack of shared vehicles as the movement source parking region, and the setting of parking regions which look to be approaching an excess number of shared vehicles as the movement target parking region can be prevented.

A shared vehicle distribution instruction apparatus according to a seventh aspect of the invention is a shared vehicle distribution instruction apparatus according to the fourth aspect or the sixth aspect, wherein the vehicle movement instruction device gives priority to the parking regions where personnel (for example personnel 8) who can move the shared vehicles are stationed when setting the movement source parking region.

In a shared vehicle distribution instruction apparatus with the above construction, the movement of shared vehicles can be completed in a shorter time by setting parking regions where personnel are stationed who can move a shared vehicle immediately as the movement source parking region, preferentially over those parking regions which take longer to move shared vehicles because personnel need to be brought in specially to move the shared vehicles.

A vehicle reservation control apparatus according to an eighth aspect of the invention is a vehicle reservation control apparatus comprising a reservation administration device (corresponding to steps S101 to S108 in the embodiments, for example) which accepts usage reservations from users and administers the distribution of vehicles, and which is used in a shared vehicle system which lends shared vehicles parked in a parking region to the user who has made the usage reservation, comprising: which lends shared vehicles parked in a parking region to the user who has made the usage reservation, comprising: a shared vehicle administration device (corresponding to steps S111 to S117 in the embodiments, for example) which calculates the number of shared vehicles which can be used on schedule and are available for reservation, and a vehicle redistribution calculation device (corresponding to steps S118 to S123 in the embodiments, for example) which when the shared vehicle administration device detects a change in the number of the shared vehicles executes a vehicle redistribution calculation for the vehicles administered by the reservation administration device based on the changed number of the shared vehicles thus detected.

In a vehicle reservation control apparatus with the above construction, when a change is detected in the number of shared vehicles by the shared vehicle administration device, the vehicle redistribution calculation device executes vehicle redistribution calculation for the vehicles administered by the reservation administration device based on the changed number of shared vehicles thus detected, thereby enabling a determination to be made as to whether or not a shared vehicle can be lent out to a user on schedule.

A vehicle reservation control apparatus according to a ninth aspect of the invention is a vehicle reservation control apparatus according to the eighth aspect, wherein the shared vehicle administration device comprises a reservation acceptance control device which denies reservation requests from the user made through the reservation administration device for a shared vehicle subsequent to detecting a reduction in the number of the shared vehicles, and the vehicle redistribution calculation device executes a vehicle redistribution calculation for the vehicles administered by the reservation administration device based on the reduced number of the shared vehicles thus detected.

In a vehicle reservation control apparatus with the above construction, if a shared vehicle which is scheduled for use is not returned to a port on schedule due to the circumstances of the previous user or because of traffic congestion or the like, or when a fault of some kind is found with the shared vehicle itself, for example, the shared vehicle administration device recognizes the incidence of a shared vehicle which cannot be used on schedule, and the reservation acceptance control device denies subsequent reservation requests for this shared vehicle made through the reservation administration device by new users, thereby preventing the situation where vehicles cannot to be borrowed on schedule because of a reduction in the number of vehicles available for use.

A vehicle reservation control apparatus according to a tenth aspect of the invention is a vehicle reservation control apparatus according to the ninth aspect, wherein the reservation acceptance control device resumes the acceptance of reservation requests from the users based on the calculation results of the vehicle redistribution calculation device.

In a vehicle reservation control apparatus with the above construction, when a shared vehicle which was not returned to a port on schedule is finally returned to a port, or when a shared vehicle which had broken down is repaired and restored to a state of being available for use, the acceptance of reservation requests from users for this shared vehicle is resumed, automatically restoring the shared vehicle system to a normal state.

BRIEF DESCRIPTION OF THE DRAWINGS

FIG. 1 is a block diagram showing the construction of a first embodiment of the present invention.
FIG. 2 is a diagram showing the construction of a shared vehicle used in the embodiment.
FIG. 3 is a diagram showing a port used in the embodiment for parking the shared vehicle.
FIG. 4 is a flow chart showing an inter-port shared vehicle movement instruction procedure in the embodiment.
FIG. 5 is a flow chart showing evaluation value calculation processing in the embodiment.
FIG. 6 is a flow chart showing vehicle movement instruction processing in the embodiment.
FIG. 7 is a flow chart showing vehicle movement instruction processing in the embodiment.
FIG. 8 is a flow chart showing an inter-port shared vehicle movement instruction procedure in a fourth embodiment of the present invention.
FIG. 9 is a flow chart showing evaluation value calculation processing in the embodiment.
FIG. 10 is a flow chart showing vehicle movement instruction processing in the embodiment.
FIG. 11 is a flow chart showing vehicle movement instruction processing in the embodiment.
FIG. 12 is a flow chart showing reservation processing in a seventh embodiment of the present invention.
FIG. 13 is a flow chart showing reservation acceptance control processing in the embodiment.
FIG. 14 is a diagram showing possible reservation times after a vehicle is restored in the embodiment.

DETAILED DESCRIPTION OF THE INVENTION

Hereunder is a description of embodiments of the present invention with reference to figures (first embodiment).

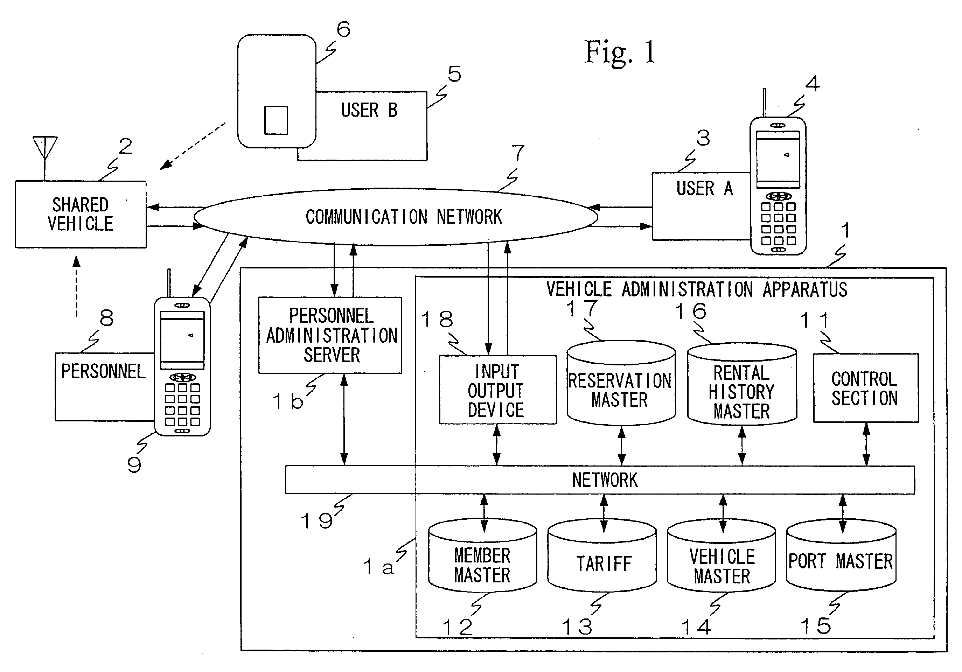

FIG. 1 is a block diagram showing a structure of a shared vehicle system containing an administration apparatus for reservation of a shared vehicle of a first embodiment of the present invention. In the embodiment of FIG. 1, a shared vehicle distribution instruction apparatus in which vehicles are moved preferentially from a parking region which is expected to have the highest number of parked shared vehicles after a predetermined time, is described.

In FIG. 1, a control room 1 is an administration center of a shared vehicle system in which a vehicle administration apparatus 1a is provided for administering vehicle sharing, such as the reservation and dispatching of shared vehicles 2 which are parked in a plurality of parking regions called ports and shared by users, and charging usage fees and the like, and a personnel administration server 1b is provided for administering personnel who perform port administration and who move a shared vehicle 2 between ports. The shared vehicle 2 is used by two methods, namely a method called "reserve and ride" in which a user A3 registered as a member in the control room 1 inputs a reservation from a portable terminal 4 to the control room 1, and enters information identifying a vehicle, such as departure and arrival ports, date, time, vehicle type and the like to secure the vehicle, and a method called "direct riding" in which a user B3 registered as a member in the control room 1, uses a vacant vehicle directly by means of their own smart cart 6.

Furthermore, when a bias occurs in the number of parked shared vehicles 2 between a plurality of ports 50, the personnel 8 receives movement instructions from the personnel administration server 1b by means of his or her portable terminal 9, and moves the shared vehicles 2 between the instructed ports to control the number of parked shared vehicles 2 for each port so as to be appropriate.

Since the placement of the personnel 8 moving the shared vehicle 2 changes each time the shared vehicle 2 is moved, the personnel administration server 1b is a server for administering where the personnel 8 are located (port) at the moment, and the placement status of the personnel 8 for the ports, and communicates the placement status of the personnel 8 to the vehicle administration apparatus 1a as information for selecting a shared vehicle movement port, and communicates the shared vehicle 2 movement instruction received from the vehicle administration apparatus 1a to the portable terminal 9 carried by the personnel 8.

Moreover, the communication network 7 is a communication network for connecting the portable terminal 4 held by the user A3 and the control room 1, the shared vehicle 2 and the control room 1, and the portable terminal 9 held by the personnel 8 and the control room 1. It transmits and receives information by; wireless communication by WAP (Wireless Application Protocol) or the like, the Internet using the WWW (World Wide Web), or wired communication via a public line network such as a PSTN (Public Switch Telephone Network), ISDN (R) (Integrated Services Digital Network) and the like, for example.

The control room 1 administers one or more shared vehicles 2. In addition, there may be any number of users A3 and users B5. Furthermore, the control room 1 administers a plurality of ports, and the personnel 8 are placed in sufficient numbers to correspond to the plurality of ports.

Moreover, the portable terminal 4 and the portable terminal 9 are terminals having a connection function with a computer network or public line network such as the Internet and the like, which includes not only portable terminals including portable telephones and the personal handy phone system connected by wireless communication and mobile communication terminals, but also terminals connected by wired communication. Furthermore, terminals using the above-described wired or wireless communication include terminals having a simple computer network connection function.

Consequently, for the movement instructions for the shared vehicle communicated from the personnel administration server 1b to the personnel 8, the personnel 8 may positively access the personnel administration server 1b using the portable terminal 9, and receive a message (movement instruction). Furthermore, the message (movement instruction) may be automatically communicated from the personnel administration server 1b to the portable terminal 9.

Moreover, the vehicle administration apparatus 1a comprises: a control unit 11, a member master 12; a tariff 13, a vehicle master 14, a port master 15, a rental history master 16, a reservation master 17, and an input output device 18.

The control unit 11 executes a vehicle administration control program in a computer system having a CPU (Central Processing Unit), and administers the operation of the whole of the vehicle administration apparatus 1a. Details of the operation of the control unit 11 are described later.

The member master 12 is a data base which stores registered data of each user registered as a member, in which (1) user ID, (2) address, (3) authorization information, and the like, are stored for each member.

The tariff 13 is a data base in which a rate schedule for the usage of shared vehicles 2 is stored, and it stores (1) basic rate, (2) extended charge, (3) surcharge and discount charge, and the like.

The vehicle master 14 is a data base in which the status of each shared vehicle is stored in order to administer the shared vehicles 2, and it stores for example; (1) vehicle number, (2) vehicle information including vehicle type (type), equipment, color and the like, (3) parking location (parking port), (4) vehicle usage status, and the like.

The port master 15 is a data base in which the status of ports is stored in order to administer the shared vehicles 2, and it stores for example; (1) number of vehicles parked, (2) number of actual vehicles, (3) parked vehicle number, and the like.

The rental history master 16 is a data base in which a usage history of the shared vehicles 2 is stored, and it stores; (1) user ID, (2) (rental) vehicle number, (3) rental time, (4) return time, (5) rental location, (6) return location, (7) distance traveled, (8) fuel consumed, and the like, for example, as individual information for each user.

The reservation master 17 is a data base in which reservation information is stored in order to administer vehicle reservation by the users A3 for "reserve and ride", and it stores; (1) departure port, (2) arrival port, (3) information such as vehicle type, vehicle number and the like, (4) reservation start time, and (5) reservation finish time, associated with the user ID of the user A3.

The input and output device 18 is an interface section for the vehicle administration apparatus 1a to transmit and receive information associated with vehicle rental reservations to and from the portable terminal 4, and for the vehicle administration apparatus 1a to transmit and receive information associated with the rental and return of vehicles, that is vehicle administration data, to and from the shared vehicles 2. Here, transmission and reception of vehicle administration data between the vehicle administration apparatus 1a and the shared vehicles 2 are performed directly by wireless communication.

Moreover, a network 19 is provided in the vehicle administration apparatus 1a. The network 19 is a communication network constituting a LAN (Local Area Network) for connecting the control unit 11, the member master 12, the tariff 13, the vehicle master 14, the port master 15, the rental history master 16, the reservation master 17 and the input and output device 18, to perform data transmission and reception. and whereby the vehicle administration apparatus 1a transmits and receives data related to the number of parked shared vehicles 2 in a port, or vehicle movement instructions, to the personnel administration server 1b.

Next, a shared vehicle 2 used in the present embodiment is described based on the drawings.

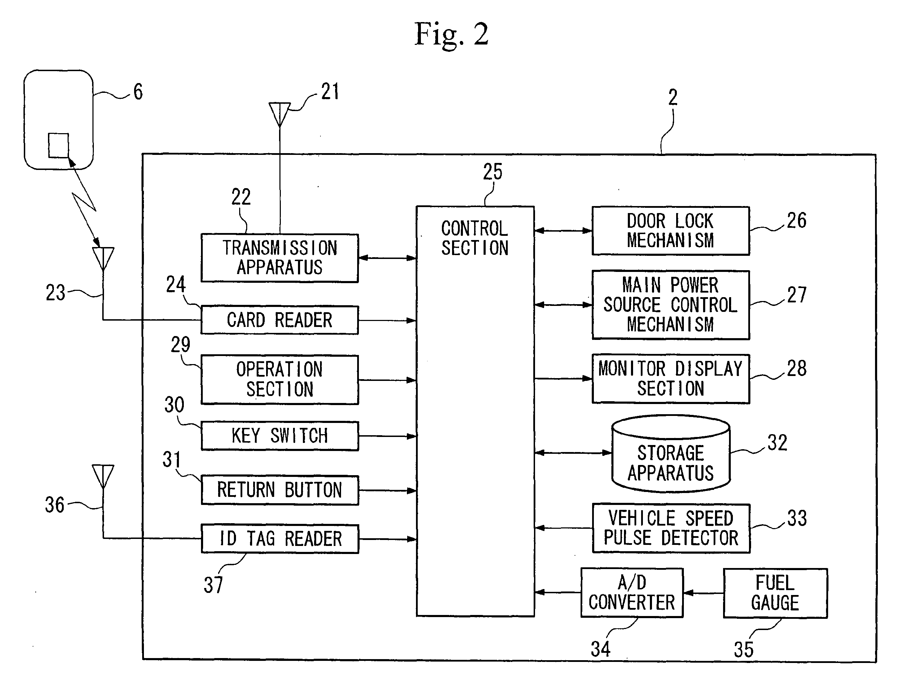

FIG. 2 is a block diagram showing the construction of the shared vehicle 2. In FIG. 2, the shared vehicle 2 comprises; a communication antenna 21, a communication apparatus 22, a card antenna 23, a card reader 24, a control section 25, a door locking mechanism 26, a main power source control mechanism 27, a monitor display section 28, an operation section 29, a key switch 30, a return button 31, a storage device 32, a vehicle speed pulse detector 33, an A/D converter 34, a fuel gauge 35, a tag antenna 36, and an ID tag reader 37.

The shared vehicle 2 is parked in a parking space called a lot which accommodates a single vehicle in a parking region called a port, and exchanges a variety of data with the control room 1 using wireless transmission via the communication apparatus 22 connected to the communication antenna 21.

When a user A3 or a user B5 holds up a non-contact read/write type smart card 6 to the card antenna 23 provided on the shared vehicle 2, the shared vehicle 2 transmits the signal read by the card reader 24 to the control section 25 which administers the operation of the shared vehicle 2.

The control section 25 communicates with the control room 1 by wireless transmission via the communication apparatus 22 and the communication antenna 21, transmitting the fact that a user has held up the smart card 6 to request the use of the shared vehicle 2 to the control room 1, and requests permission to borrow the vehicle.

Furthermore, the storage device 32 comprises ROM (Read Only Memory) or RAM (Random Access Memory) or the like, in which the vehicle ID number assigned to each shared vehicle 2 is stored in advance, and in which is stored temporarily the user ID number and PIN (Personal Identification Number) input by the user. The control section 25 transmits the vehicle ID number stored in the storage device 32 and the user ID number input by the user to the control room 1, and if permission is granted to the user to borrow the shared vehicle 2, the control room 1 from which the lending of the vehicle was requested instructs the door locking mechanism 26 to unlock the door key, and furthermore, once the control section 25 confirms that the PIN number matches, the main power source control mechanism 27 activates the ignition circuit.

When a user A3 or a user B5 borrows the shared vehicle 2, he or she inputs the required information into the control section 25 using the operation section 29 according to the instructions displayed on the monitor display section 28, and then presses the key switch 30 to turn ON the ignition of the shared vehicle 2, after which he or she can begin to use the shared vehicle 2. Furthermore, when a user returns the shared vehicle 2 to a port, he or she presses the return button 31 in the port to execute the return process.

The smart card 6 is an ID terminal with an IC containing a processor capable of simple decision making within the card and can read and write a stored ID number, which in the present embodiment is an ID terminal used to communicate the ID number to the shared vehicle 2. This may be a non-contact or contact read/write type IC card, but is not limited to a non-contact or contact based read/write type provided that it is compatible with the reading apparatus on the shared vehicle 2, and anything may be used which can read and write the stored ID number, including a magnetic card or a mobile telephone containing an IC chip.

Furthermore, while the shared vehicle 2 is traveling, a vehicle speed pulse signal showing the traveling state of the shared vehicle 2 is transmitted from the vehicle speed pulse detector 33 to the control section 25. Moreover, since the fuel gauge 35 is connected to the control section 25 via the A/D converter 34, the control section 25 can thereby confirm the state of fuel consumption.

Furthermore, the tag antenna 36 and the ID tag reader 37 are devices used by the shared vehicle 2 parked in a port, to identify the lot within the port.

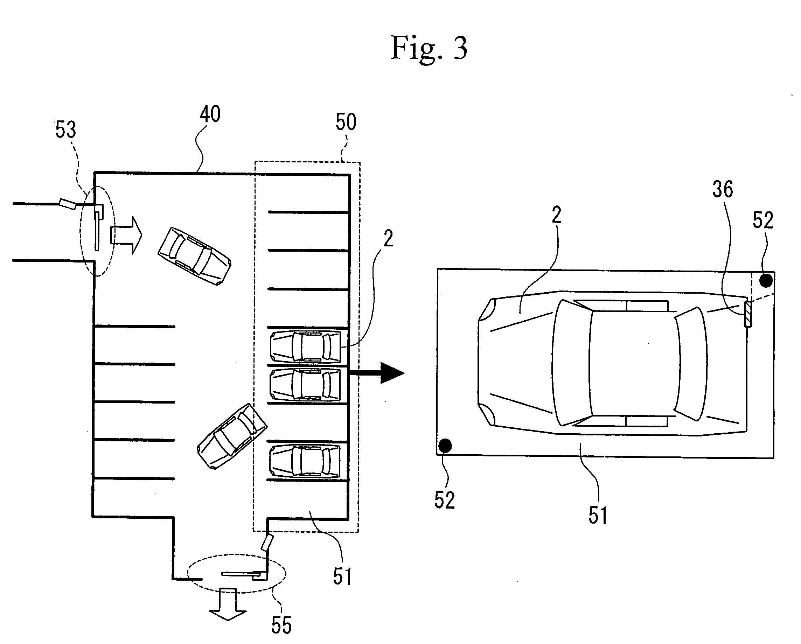

Next is a description of ports and tags using FIG. 3. Ports 50 are parking regions for parking the shared vehicles 2. The ports 50 in which the shared vehicles 2 are parked are placed in a range of locations so that the users 3 can move freely between the plurality of ports 50 at different geographical locations using the shared vehicles 2. More specifically, as shown in FIG. 3, in the shared vehicle system of this embodiment, for example a part of a parking facility 40 used by ordinary vehicles is used as a port 50 for parking shared vehicles 2.

The place where the shared vehicles 2 can be preferentially parked within the region of the parking facility 40, is only within a region shown as the port 50 which is allocated with an agreed number of parked cars determined by a tenancy agreement between the owner of the shared vehicle and the administrator, and other regions are for parking ordinary vehicles. Moreover, a plurality of lots 51 for parking the shared vehicles 2 is provided in the port 50, and an ID tag 52, which transmits an ID number (lot ID) assigned individually to each of the ports 50 and the lots 51, is provided in each of the lots 51.

The ID tags 52 exchange ID numbers specific to each of the ports 50 and the lots 51 with the tag antennas 36 using any one of an electromagnetic coupling method, an electromagnetic induction method, a microwave method, an electrostatic coupling method. an optical transmission method, and the like, and the shared vehicles 2 recognize the locations of the ports and the lots where they are parked by the ID tag readers 37 reading the signals received by the tag antennas 36. In addition, as shown in FIG. 3, the two ID tags 52 are placed diagonally in the lot 51, which correspond to the front end and the rear end of the shared vehicle 2, and the tag antenna 36 is placed on a front corner or a rear comer (rear right corner in FIG. 3) of the shared vehicle 2 close to the ID tag 52.

Furthermore, the mechanism to capture the location of the port 50 and the lot 51 where the shared vehicle 2 is parked is not limited to the ID tag 52, but may also be a transmitter and receiver using an ETC (electronic toll collection system), or a position detection device using GPS (Global Positioning System).

Next, the vehicle lending/returning operation of the shared vehicle system of the present embodiment is described simply with reference to FIG. 1 and FIG. 2.

First, when a user A3 wishes to reserve the shared vehicle 2, he or she accesses a vehicle administration apparatus 1a from a mobile terminal 4 via a communication network 7 such as the internet, and performs the steps involved in the reservation process. Then having secured the right to use the shared vehicle 2, the user actually goes to the port 50 where the shared vehicle 2 is parked and holds up the smart card 6 to the card antenna 23 of the shared vehicle 2 in question to present his or her own user ID.

Furthermore, when a user B5 wishes to use a shared vehicle 2 without making a reservation, the user B5 goes directly to the port 50 where the shared vehicle 2 is parked without making a reservation with the vehicle administration apparatus 1a, and holds up the smart card 6 to the card antenna 23 of the shared vehicle 2 in question to present his or her own user ID.

The shared vehicle 2 presented with the user ID reads the user ID stored on the smart card 6 using the card reader 24 and determines whether to allow or deny the user access to inside the car, while checking the user ID with the control room 1 via the communication apparatus 22 and the communication antenna 21. On the other hand, in the control section 11 of the vehicle administration apparatus 1a, upon receiving a request from the shared vehicle 2 to check a user ID which the user is attempting to use, a determination is made based on the received user ID as to the whether the user should be allowed or denied use of the vehicle, and a signal indicating the approval or denial of vehicle usage for the user is sent to the shared vehicle 2.

Furthermore, once the user is allowed access inside the vehicle, the user inputs his or her assigned PIN number using the operation section 29 of the shared vehicle 2.

In the shared vehicle 2 where the PIN was input, a determination is made in the control section 25 as to whether the input PIN, and a PIN assigned to the user beforehand, which is transmitted from the vehicle administration apparatus 1a match. If it is determined that the PINs match, the main power source control mechanism 27 activates the ignition circuit, allowing the user to start the drive unit 31 of the shared vehicle 2 by operating the key switch 30, and begin using the shared vehicle 2.

Furthermore, when the user thus permitted to use the shared vehicle 2 finishes using the shared vehicle 2, he or she performs the process of returning the shared vehicle 2 to the port 50. Then, once the vehicle administration apparatus 1a has acquired use information for billing purposes, acquired the lot ID of the lot 51 and the port 50 where the shared vehicle 2 is parked, and generated billing information while ascertaining the location where the shared vehicle 2 is parked, the vehicle lending/returning operation of the shared vehicle system of the present embodiment is completed.

The vehicle use information shows information required to calculate the usage fee of the shared vehicle 2 such as the rental time and return time, the distance traveled, and the fuel remaining on its return (amount of fuel consumed).

Next, the process of issuing an instruction to personnel 8 to move (forward) a shared vehicle 2 to eliminate bias in the number of parked shared vehicles 2 between a plurality of ports 50 in the shared vehicle system above, is described with reference to the figures. In the present embodiment, for ease of description, a case is described in which the ports 50 to be administered are 5 ports, from port A to port E.

First, in order to instruct personnel 8 to move a shared vehicle 2, it is necessary to first determine accurately which ports 50 are lacking in shared vehicles 2 and which ports 50 have excess shared vehicles 2, so that efficient movement instructions can be issued.

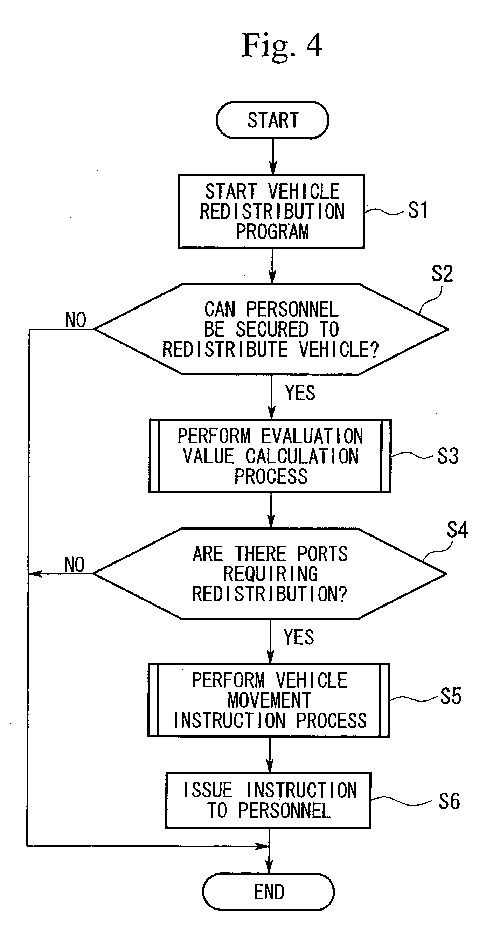

Here, as shown in the flow chart in FIG. 4 which shows the inter-port shared vehicle movement instruction procedure, first, a vehicle redistribution program is started (step S1), and then a personnel administration server 1b determines whether or not personnel 8 can be secured to perform vehicle redistribution (step S2).

In step S2, if personnel 8 cannot be secured to perform vehicle redistribution (NO in step S2), the vehicle redistribution program is terminated.

Furthermore, in step S2, if personnel 8 can be secured to perform vehicle redistribution (YES in step S2), the number of cars parked at each port 50 after a predetermined time is estimated in the vehicle administration apparatus 1a based on the movement records for the shared vehicles 2 in order to ascertain accurately the excess or lack status of shared vehicles 2 for each port 50. Then a ranking for shared vehicle 2 movement is assigned to every port 50, and evaluation value calculation processing for selecting ports to undergo vehicle redistribution is performed (step S3).

Once the evaluation value calculation processing is completed, the vehicle administration apparatus 1a determines whether or not a port 50 exists which requires vehicle redistribution, and if no port 50 exists which requires vehicle redistribution (NO in step S4), the vehicle redistribution program is terminated.

Furthermore, in step S4, if a port 50 which requires vehicle redistribution is found (YES in step S4), the vehicle administration apparatus 1a determines from which port 50 to which port 50 a shared vehicle 2 should actually be moved based on the calculated evaluation values, and performs vehicle movement instruction processing in which a vehicle movement instruction for moving a shared vehicle 2 between the source and target ports 50 is output to the personnel administration server 1b (step S5).

Finally, the personnel administration server 1b communicates the shared vehicle 2 movement instruction received from the vehicle administration apparatus 1a, to the portable terminal 9 carried by the personnel 8 via the communications network 7 (step S6), and the vehicle redistribution program is completed.

Next, the evaluation value calculation process in step S3 in FIG. 4 is described in detail with reference to the drawings.

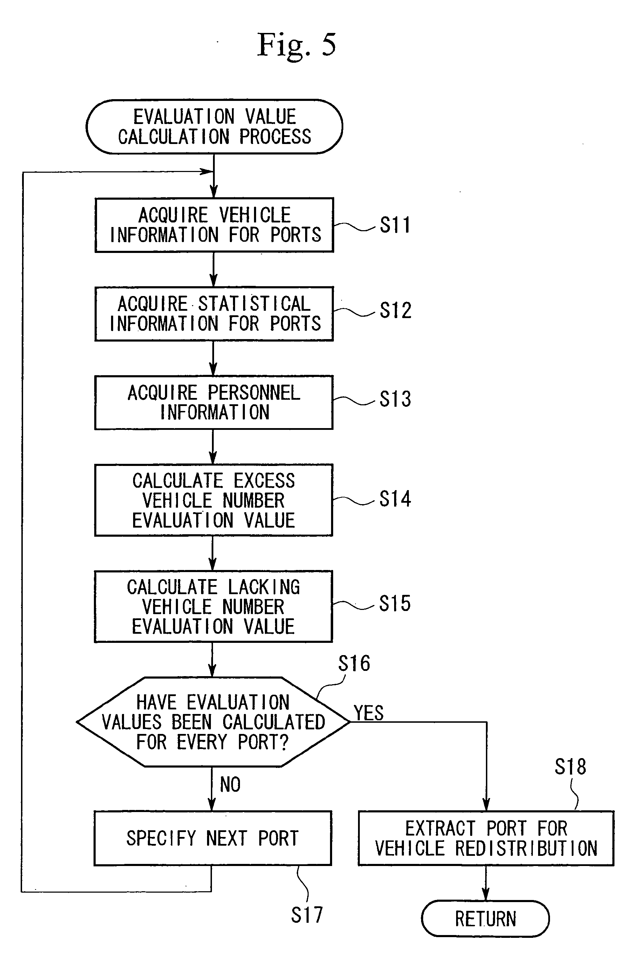

FIG. 5 is a flow chart showing evaluation value calculation processing for extracting the ports 50 which require vehicle redistribution. In this processing, the vehicle administration apparatus 1a evaluates the number of shared vehicles 2 parked at each port 50 and assigns a ranking to each port 50.

In FIG. 5, first, the control section 11 of the vehicle administration apparatus 1a acquires information relating to the number of shared vehicles 2 parked at the specified port 50 (for example port A), from the port master 15, and acquires information relating to the number of shared vehicles 2 which have been reserved and are scheduled for use, from the reservation master 17 (step S11).

Next, the control section 11 of the vehicle administration apparatus 1a acquires the movement records of the shared vehicles 2 of the specified port 50 by extracting the information as statistical information for each port (step S12) from the rental history master 16.

Furthermore, the control section 11 of the vehicle administration apparatus 1a acquires information relating to the personnel 8 indicating where the personnel 8 are located and the status of the personnel 8, from the personnel administration server 1b (step S13).

Based on the various information acquired in steps S11 to S13, the estimated number of excess parked vehicles $N_{V-excess}$ at the specified port 50 is calculated by the equation (1) below.

[Equation 1]

$$N_{V-excess} = A + B + C + D + E + F - G - H \qquad (1)$$

where:

$N_{V-excess}$: the estimated number of excess parked vehicles
A: Vehicles out of service (the number of vehicles currently parked which are unable to be used)
B: Available vehicles (the number of vehicles currently parked which are available for use)
C: Number of vehicles held by users (the number of vehicles already lent which are still in the parking area)
D: Number of vehicles held by personnel (the number of vehicles in the parking area which are in use by personnel and therefore unavailable)
E: Reserved vehicles (vehicles in the parking area already allocated to users)
F: Number of vehicles scheduled to arrive (the number of vehicles estimated to arrive in the current time period)
G: Number of vehicles scheduled to depart (the number of vehicles estimated to depart in the current time period)
H: Number of personnel in transit (the number of personnel who have left the port in question and are on the move performing vehicle redistribution)

The excess vehicle number evaluation value $E_{V-excess}$ (first evaluation value) which corresponds with the estimated number of excess parked vehicles $N_{V-excess}$ is then calculated by equation (2) below (step S14).

[Equation 2]

a) when $N_{V-excess} \leq N_L$,

$$E_{V-excess} = N_{V-excess} - (N_L + 1)$$

b) when $N_L < N_{V\text{-excess}} < N_H$,

$$E_{V\text{-excess}} = (N_{V\text{-excess}} - N_L) / (N_H - N_L)$$

c) when $N_H \leq N_{V\text{-excess}}$,

$$E_{V\text{-excess}} = N_{V\text{-excess}} - (N_H - 1) \tag{2}$$

where:

$N_{V\text{-excess}}$ : estimated number of excess parked vehicles
$E_{V\text{-excess}}$ : excess vehicle number evaluation value
$N_L$: parked vehicle lower limit threshold
$N_H$: parked vehicle upper limit threshold

The parked vehicle lower limit threshold in equation (2) is a value which is set individually for each port 50, and when the number of shared vehicles 2 in a port 50 is below this threshold, then if mechanical trouble occurs in a shared vehicle 2 or a shared vehicle 2 cannot return to the port 50 on time due to traffic congestion or the like, there is a possibility that a shared vehicle 2 which can be lent to a user cannot be secured. This threshold is therefore a minimum threshold showing that additional shared vehicles 2 are required. Furthermore, the parked vehicle upper limit threshold is a value which is set individually for each port 50. If the number of shared vehicles 2 in a port 50 exceeds this threshold, then when a plurality of users attempt to return shared vehicles 2 to this port 50 at once, there is a possibility that the maximum number of vehicles allowed by agreement to park in the traffic measuring section 50 is exceeded, and the user is forced to occupy an ordinary parking space. This threshold is therefore a maximum threshold indicating that shared vehicle 2 movement (deduction) is necessary.
Furthermore, in the same manner, the estimated number of lacking parked vehicles $N_{V\text{-lack}}$ is calculated for the specified port 50 by equation (3) based on the various information acquired in steps S11 to S13.

[Equation 3]

$$N_{V\text{-lack}} = B + F - G - H \tag{3}$$

Where:

$N_{V\text{-lack}}$ : The estimated number of lacking parked vehicles
B: Vehicles available for use
F: Number of vehicles scheduled to arrive
G: Number of vehicles scheduled to depart
H: Number of personnel in transit

The lacking vehicle number evaluation value $E_{V\text{-lack}}$ (second evaluation value) which corresponds with the estimated number of lacking parked vehicles $N_{V\text{-lack}}$ is then calculated by equation (4) below (step S15).

[Equation 4]

a) when $N_{V\text{-lack}} \leq N_L$,

$$E_{V\text{-lack}} = N_{V\text{-lack}} - (N_L + 1)$$

b) when $N_L < N_{V\text{-lack}} < N_H$,

$$E_{V\text{-lack}} = (N_{V\text{-lack}} - N_L) / (N_H - N_L)$$

c) when $N_H \leq N_{V\text{-lack}}$,

$$E_{V\text{-lack}} = N_{V\text{-lack}} - (N_H - 1) \qquad\qquad (4)$$

where:

N_{V-lack} : The estimated number of lacking parked vehicles
E_{V-lack} : The lacking vehicle number evaluation value
N_L : The parked vehicle lower limit threshold
N_H : The parked vehicle upper limit threshold

Whether or not the number of excess parked vehicles $N_{V\text{-excess}}$ and the number of parked vehicles lacking $N_{V\text{-lack}}$ have been calculated for every port 50 is then determined (step S16), and if the number of excess parked vehicles $N_{V\text{-excess}}$ and the number of parked vehicles lacking $N_{V\text{-lack}}$ have not been calculated for every port 50 (NO in step S16), the next port 50 is specified (step S17), the flow returns to step S11, and the above processing is repeated.

Furthermore, in step S16, if the number of excess parked vehicles $N_{V\text{-excess}}$ and the number of lacking parked vehicles $N_{V\text{-lack}}$ have been calculated for every port 50 (YES in step S16), a port 50 where movement of a shared vehicle 2 (vehicle redistribution) is required is extracted (step S18), and the evaluation value calculation process is completed. The determination as to whether a port 50 requires movement of a shared vehicle 2 involves at least a determination that a port 50 in which the evaluation value shows a negative value, requires the addition of a shared vehicle 2 and that a port 50 in which the evaluation value is greater than 1 requires the deduction of a shared vehicle 2.

Table 1 below is a table showing the actual number of parked cars, the estimated number of excess parked vehicles $N_{V\text{-excess}}$, the excess vehicle number evaluation value $E_{V\text{-excess}}$, the estimated number of lacking parked vehicles $N_{V\text{-lack}}$, and the lacking vehicle number evaluation value $E_{V\text{-lack}}$ for each port 50 from port A to port E when the parked vehicle lower limit threshold is set to 2 and the parked vehicle upper limit threshold is set to 7. Each evaluation value is calculated according to the calculation methods of the evaluation value calculation processing above to obtain the results shown in Table 1, and accordingly, the ports which require shared vehicle 2 movement are port A, port B and port E. Here, port A and port B require the addition of shared vehicles 2, and port E requires shared vehicles 2 to be deducted.

[Table 1]

| Port Number | Port A | Port B | Port C | Port D | Port E |
|---|---|---|---|---|---|
| Information Type | | | | | |
| A: Vehicles out of service | 0 | 2 | 1 | 1 | 0 |
| B: Available vehicles | 1 | 0 | 3 | 4 | 4 |
| C: Number of vehicles held by users | 1 | 1 | 0 | 0 | 1 |
| D: Number of vehicles held by personnel | 3 | 0 | 0 | 0 | 1 |
| E: Reserved vehicles | 2 | 1 | 1 | 1 | 1 |
| F: Number of vehicles scheduled to arrive | 1 | 1 | 2 | 1 | 2 |
| G: Number of vehicles scheduled to depart | 2 | 1 | 1 | 1 | 0 |
| H: Number of personnel in transit | 1 | 0 | 0 | 1 | 1 |
| | | | | | |
| Actual number of parked cars $N_{V\text{-real}}$ | 7 | 4 | 5 | 6 | 7 |
| Estimated number of lacking parked vehicles $N_{V\text{-lack}}$ | -1 | 0 | 4 | 3 | 5 |
| Estimated number of excess parked vehicles $N_{V\text{-excess}}$ | 5 | 3 | 6 | 5 | 8 |
| Lacking vehicle number evaluation value $E_{V\text{-lack}}$ | -4 | -3 | 2/5 | 1/5 | 3/5 |
| Excess vehicle number evaluation value Ev-(excess | 3/5 | 1/5 | 4/5 | 3/5 | 2 |

Next, vehicle movement instruction processing according to step S5 in FIG. 4 is described in detail.

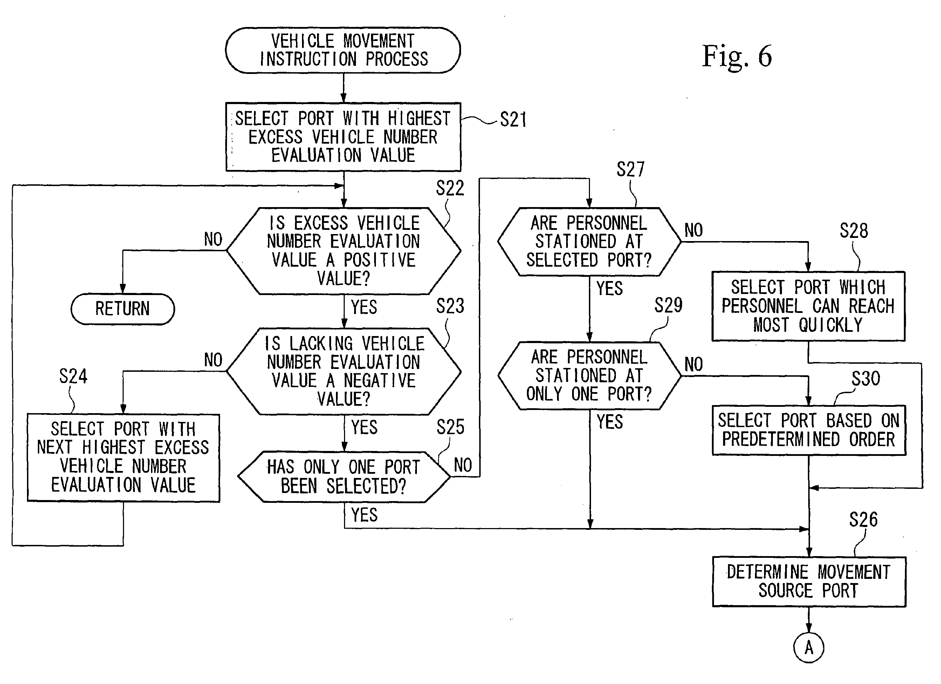

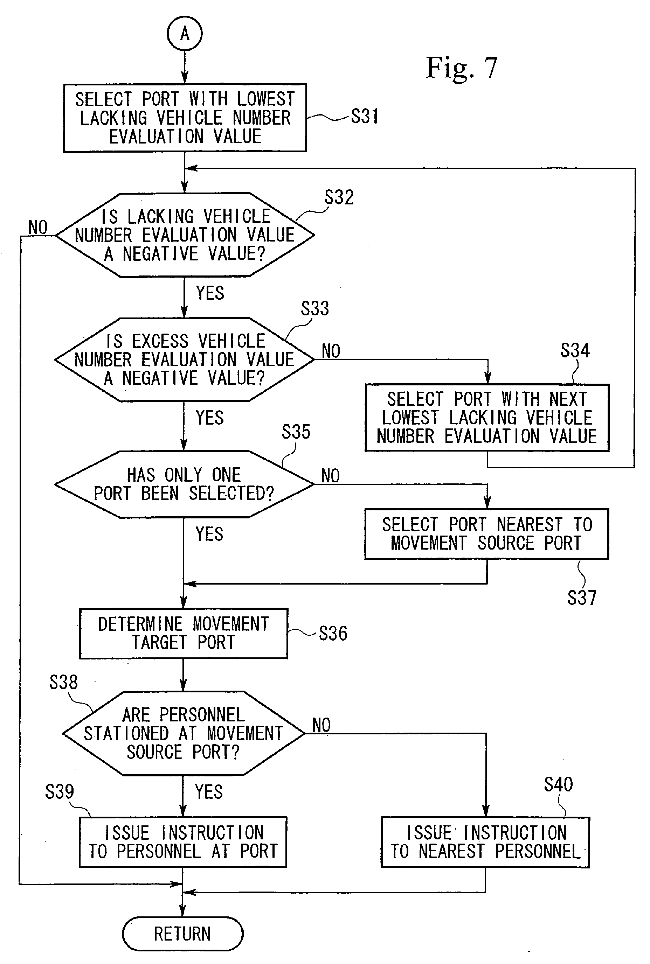

FIG. 6 and FIG. 7 are flow charts showing vehicle movement instruction processing. In this processing the vehicle administration apparatus 1a outputs to a personnel administration server 1b, a vehicle movement instruction to move a shared vehicle 2 from a movement source port to a movement target port 50, based on the evaluation values which the vehicle administration apparatus 1a has calculated itself.

In FIG. 6 and FIG. 7, first the control section 11 of the vehicle administration apparatus 1a selects the port 50 with the highest excess vehicle number evaluation value $E_{V-excess}$ as calculated in the evaluation value calculation processing (step S21).

Next, whether or not the highest excess vehicle number evaluation value $E_{V-excess}$ is a positive value is determined (step S22), and if the highest excess vehicle number evaluation value $E_{V-excess}$ is not a positive value (NO in step S22), the vehicle movement instruction processing is terminated, and the processing returns to step S3 in FIG. 4.

Furthermore, in step S22, if the highest excess vehicle number evaluation value $E_{V-excess}$ is a positive value (YES in step S22), then next whether or not the lacking vehicle number evaluation value $E_{V-lack}$ is a positive value is determined (step S23).

In step S23, if the lacking vehicle number evaluation value $E_{V-lack}$ for the selected port 50 is not a positive value (NO in step S23), then the port 50 with the next highest excess vehicle number evaluation value $E_{V-excess}$ is selected (step S24), e flow returns to step S22, and the above processing is repeated.

On the other hand, in step S23, if the lacking vehicle number evaluation value $E_{V-lack}$ for the selected port 50 is a positive value (YES in step S23), then whether or not only one port 50 has been selected is determined (step S25).

In step S25, if only one port 50 has been selected (YES in step S25), then this port 50 is set as the movement target port (step S26).

Furthermore, in step S25, if more than one port 50 has been selected (NO in step S25), then a determination is made as to whether personnel 8 are stationed at the selected ports 50 or not (step S27).

In step S27, if no personnel 8 are stationed at the selected ports 50 (NO in step S27), the control section 11 of the vehicle administration apparatus 1a acquires the placement status of the personnel 8 from the personnel administration server 1b, selects the port 50 which personnel 8 can reach from another port the most quickly, as a candidate for the movement target port (step S28), and sets this port 50 as the movement source port (step S26).

Furthermore, in step S27, if it is determined that personnel 8 are stationed at the selected ports 50 (YES in step S27), whether or not there is only one port 50 at which personnel 8 are stationed is determined (step S29).

In step S29, if there is only one port 50 at which personnel 8 are stationed (YES in step S29), then this port 50 is set as the movement source port (step S26).

Furthermore, in step S29, if there is more than one port 50 at which personnel 8 are stationed (NO in step S29), then a port is selected according to a predetermined order (step S30), and this port is set as the movement source port (step S26).

Once the movement source port has been set, next the port 50 with the lowest lacking vehicle number evaluation value $E_{V-lack}$ is selected (step S31).

Then, whether or not the lacking vehicle number evaluation value $E_{V-lack}$ is a negative value is determined (step S32), and if the lacking vehicle number evaluation value $E_{V-lack}$ is not a negative value (NO in step S32), the vehicle movement instruction process is terminated, and the processing returns to step S3 in FIG. 4.

Furthermore, in step S32, if the lacking vehicle number evaluation value $E_{V-lack}$ is a negative value (YES in step S32), then next, whether or not the excess vehicle number evaluation value $E_{V-excess}$ for the selected port 50 is a negative value is determined (step S33).

In step S33, if the excess vehicle number evaluation value $E_{V-excess}$ for the selected port 50 is not a negative value (NO in step S33), then the port 50 with the next lowest lacking vehicle number evaluation value $E_{V-lack}$ is selected (step S34), the flow returns to step S32, and the above processing is repeated.

On the other hand, in step S33, if the excess vehicle number evaluation value $E_{V-excess}$ for the selected port 50 is a negative value (YES in step S33), then whether or not only one port 50 has been selected is determined (step S35).

In step S35, if only one port 50 has been selected (YES in step S35), then this port 50 is set as the movement target port for the shared vehicle 2 (step S36).

Furthermore, in step S35, if more than one port 50 has been selected (NO in step S35), then the port 50 which is closest to the movement source port 50 is selected as a candidate for the movement target port (step S37), and this port 50 is set as the movement target port 50 for the shared vehicle 2 (step S36).

A determination is then made as to whether or not personnel 8 are stationed at the movement source port 50 (step S38), and if personnel 8 are stationed at the movement source port 50 (YES in step S38), then an instruction for the personnel 8 at this port 50 to move the shared vehicle 2 is output to the personnel administration server 1b (step S39), and the vehicle movement instruction process is completed.

Furthermore, in step S38, if personnel 8 are not stationed at the movement source port 50 (NO in step S38), then an instruction for the personnel 8 at a location (port) closest to the movement source port 50, to move the shared vehicle 2, is output to the personnel administration server 1b (step S40), and the vehicle movement instruction process is completed.

According to the determinations made in the vehicle movement instruction processing above, in Table 1, port A and port B can only accept additional shared vehicles 2, and can therefore only act as movement target ports. Furthermore, ports C, D and E only allow shared vehicles 2 to be deducted, and can therefore only act as movement source ports.

A shared vehicle distribution instruction apparatus in which vehicles are moved preferentially from the port (parking region) which is expected to have the highest number of parked shared vehicles after a predetermined time, was described as the first embodiment of the invention.

In the present embodiment, the control section 11 of the vehicle administration apparatus 1a constitutes the evaluation value calculation device and the vehicle movement instruction apparatus. More specifically, step S11 to step S18 in FIG. 5 correspond to the evaluation value calculation device, and step S21 to step S40 in FIG. 6 correspond to the vehicle movement instruction apparatus.

As described above, with the shared vehicle distribution instruction apparatus of the present embodiment, by moving shared vehicles 2 preferentially from the port 50 which is expected to have the highest number of shared vehicles parked after a predetermined time, there is an effect that in a port 50 where the number of parked vehicles exceeds the number of vehicles allowed by agreement and vehicles are forced to occupy parking regions reserved for ordinary vehicles, dissatisfaction of others (people other than the users of the shared vehicle usage system) caused when ordinary vehicles cannot be parked, for example, can be prevented, and the shared vehicle system can be operated properly.

[Second Embodiment]

Next a shared vehicle distribution instruction apparatus according to a second embodiment is described.

In the second embodiment, a shared vehicle distribution instruction apparatus in which vehicles are moved preferentially to the parking region estimated to have the lowest number of parked shared vehicles after a predetermined time, is described.

With the exception of the operation of the vehicle movement instruction processing, the operation of the shared vehicle distribution instruction apparatus and the construction of the apparatus are the same as in the shared vehicle distribution instruction apparatus of the first embodiment, and therefore description thereof is omitted, and the vehicle movement instruction processing in the shared vehicle distribution instruction apparatus of the present embodiment is described in detail.

In the second embodiment, in order to move shared vehicles preferentially to the port (parking region) estimated to have the lowest number of parked shared vehicles after a predetermined time, the movement target port should be determined before the movement source port in the vehicle movement instruction processing.

In other words, in the flow chart showing the vehicle movement processing for moving a shared vehicle preferentially from the port (parking region) estimated to have the highest number of parked cars after a predetermined period, the processing from step S31 to step S37 to determine the movement target port should be executed before the processing from step S21 to step S30 to determine the movement source port. Specifically, after executing sequentially the steps from step S31 to step S37, the steps from step S21 to step S30 should be executed sequentially, followed by the steps from step S38 to step S40.

As described above, according to the shared vehicle distribution instruction apparatus of the present embodiment, by moving shared vehicles 2 preferentially to the port 50 at which the lowest number of shared vehicles is estimated to be parked after a predetermined period, an effect is obtained that user dissatisfaction which results when a user cannot borrow a shared vehicle 2 at a port 50 which is lacking in shared vehicles 2 can be prevented, and customer satisfaction can be improved.

[Third Embodiment]

Next, a shared vehicle distribution instruction apparatus according to a third embodiment is described.

In the third embodiment, a shared vehicle distribution instruction apparatus is described in which a vehicle movement instruction to move a shared vehicle preferentially from the parking region where the highest number of shared vehicles are estimated to be parked after a predetermined time, and a vehicle movement instruction to move a shared vehicle preferentially to the parking region where the highest number of shared vehicles are estimated to be parked after a predetermined time, are issued alternately.

The construction of the shared vehicle distribution instruction apparatus according to the third embodiment is the same as the construction of the shared vehicle distribution instruction apparatus according to the first and second embodiments, and therefore description thereof is omitted here, and the vehicle movement instruction processing in the shared vehicle distribution instruction apparatus of the present embodiment is described in detail.

In the third embodiment, according to the flow chart showing the inter-port shared vehicle movement instruction procedure described in the first embodiment using FIG. 4, in the vehicle movement instruction processing in step S5, each time an instruction for personnel 8 to move a shared vehicle 2 is output to the personnel administration server 1b, an action of moving a shared vehicle preferentially from the parking region estimated to have the highest number of parked shared vehicles after a certain time, and an action of moving a vehicle preferentially to the parking region estimated to have the lowest number of parked shared vehicles after a certain time, may be repeated alternately.

In other words, each time an instruction for personnel 8 to move a shared vehicle 2 is output to the personnel administration server 1b, in step S5, the vehicle movement instruction processing in steps S21 to S40 described using FIG. 6 and FIG. 7 in the first embodiment, and the vehicle movement instruction processing of the second embodiment, may be performed alternately.

As described above, according to a shared vehicle distribution apparatus of the present embodiment, by alternating between moving a shared vehicle 2 preferentially from the port 50 at which the highest number of shared vehicles are estimated to be parked after a certain time, and moving a shared vehicle 2 preferentially to the port 50 at which the lowest number of shared vehicles are estimated to be parked after a certain time, the dissatisfaction of others (people other than the users of the shared vehicle system) which results when ordinary vehicles cannot be parked because the spaces are occupied by shared vehicles 2, and dissatisfaction of users which occurs when a lack of shared vehicles 2 means that a user cannot borrow a shared vehicle 2 can both be prevented, so that there is an effect that the shared vehicle system can be operated with improved customer satisfaction, without inconveniencing others who are not users of the shared vehicle system.

Moreover, in the first through third embodiments above, after the vehicle redistribution calculation is performed, if the instruction instructs that two of the personnel 8 at port A are to move to port B, the number of personnel 8 who are in transit to port B at the time of calculation is confirmed, and if that number is two or more, the calculated instruction is cancelled. However, if free personnel 8 are present at the port 50 from which the shared vehicle 2 is to be deducted, a vehicle redistribution instruction for a shared vehicle 2 is issued to these personnel 8. Furthermore, when the calculation results instruct that the shared vehicle 2 is distributed by being driven, then in the step for the evaluation value, because it is already included in the number of vehicles scheduled to arrive, the instruction is issued as is.

[Fourth Embodiment]

Next, a shared vehicle distribution instruction apparatus according to a fourth embodiment is described.

In the fourth embodiment, a shared vehicle instruction apparatus which moves vehicles preferentially from the parking region with the highest number of parked vehicles is described.

Because the construction of the shared vehicle distribution instruction apparatus according to the fourth embodiment is the same as that of the shared vehicle distribution instruction apparatus according to the first through third embodiments, here description thereof is omitted, and the vehicle movement instruction processing in the shared vehicle distribution instruction apparatus of the present embodiment is described in detail.

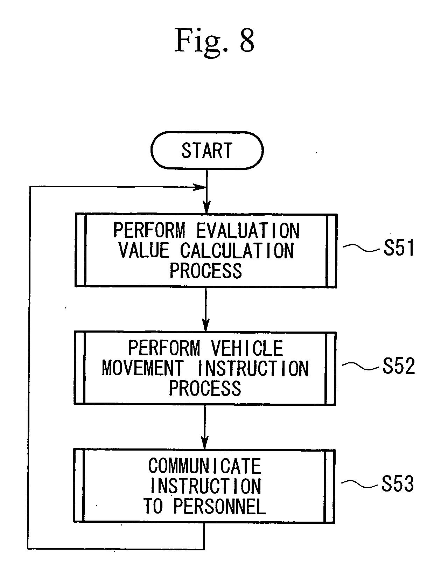

As seen in the flow chart showing the inter-port shared vehicle movement instruction procedure in FIG. 8, first in order to ascertain accurately the excess or lack of shared vehicles 2 for each port 50, the number of parked shared vehicles 2 is evaluated in the vehicle administration apparatus 1a, a ranking for the movement of shared vehicles 2 is assigned to every port 50, and evaluation value calculation processing is performed (step S51).

Next, the vehicle administration apparatus 1a determines from which port 50 to which port 50 a shared vehicle 2 should actually be moved based on the calculated evaluation values, and performs vehicle movement instruction processing in which a vehicle movement instruction for moving a shared vehicle 2 between the source and target ports 50 is output to the personnel administration server 1b (step S52).

The personnel administration server 1b then communicates the instruction for movement of a shared vehicle 2 received from the vehicle administration apparatus 1a to the portable terminal 9 carried by personnel 8, via the communication network 7 (step S53).

Furthermore, once an instruction is issued to move a shared vehicle 2 between two ports, the flow returns to step S51, and the above processing is repeated.

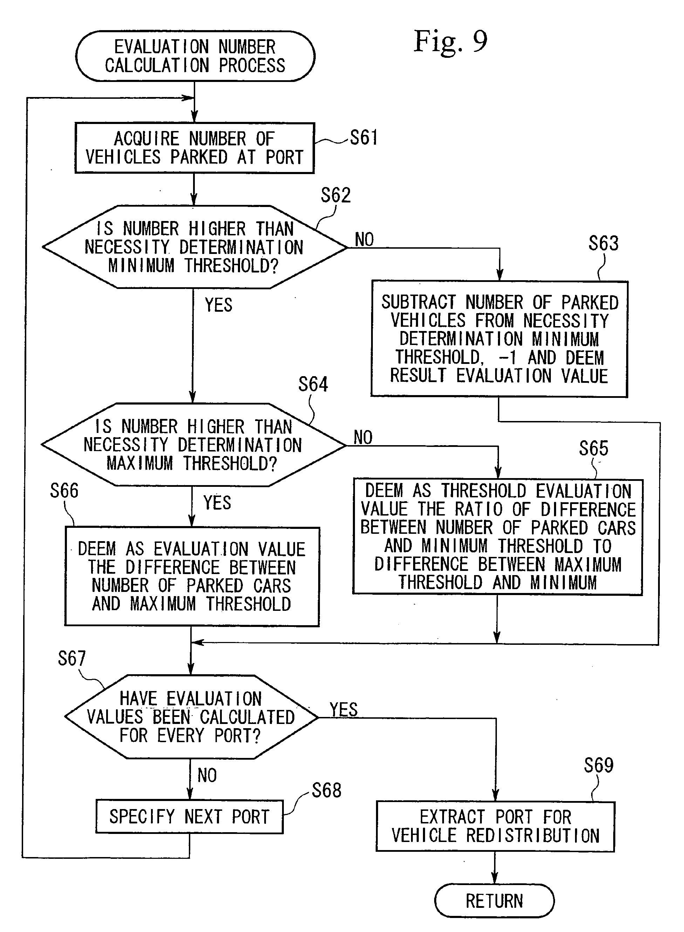

Next, the evaluation value calculation process in step S51 in FIG. 8 is described in detail. FIG. 9 is a flow chart showing evaluation number calculation processing in which the vehicle administration apparatus 1a evaluates the number of shared vehicles 2 parked at each port 50 and assigns a ranking to each port 50.

In FIG. 9, first the control section 11 of the vehicle administration apparatus 1a acquires information on the number of shared vehicles 2 parked at the specified port (for example port A) from the port master 15 (step S61).

Next, whether or not the acquired actual number of parked vehicles is higher than the determination minimum threshold is determined (step S62).

Here, the determination minimum threshold is a value which is set individually for each port 50. If the number of shared vehicles 2 at a port 50 falls below this threshold, when a shared vehicle 2 breaks down or a shared vehicle 2 cannot return to the port 50 on time due to traffic congestion, for example, it is possible that a shared vehicle 2 to be lent to the user cannot be secured, and this value therefore is a minimum threshold indicating when additional shared vehicles 2 are needed.

In step S62, when the acquired actual number of parked vehicles is lower than the determination minimum threshold (NO in step S62), a value obtained by deducting the actual number of parked vehicles from the determination minimum threshold and subtracting 1 is set as an evaluation value used to assign a ranking to each port 50 (step S63).

Furthermore, in step S62, if the acquired actual number of parked vehicles is greater than the determination minimum threshold (YES in step S62), then whether or not the actual number of parked vehicles exceeds a determination maximum threshold is determined (step S64).

Here, the determination maximum threshold is a value which is set individually for each port 50. If the number of shared vehicles 2 in a port 50 exceeds this threshold, for example when a plurality of users attempt to return shared vehicles 2 at once to this port 50, there is a possibility that the number of vehicles allowed by agreement to park at the port 50 may be exceeded, forcing a shared vehicle 2 to occupy a space for an ordinary vehicle, and this value is therefore a maximum threshold indicating when the movement (deduction) of shared vehicles 2 is needed.

In step S64, when the actual number of parked cars at a port is lower than the determination maximum threshold (NO in step S64), a ratio of the number of vehicles which is the difference after subtracting the determination minimum threshold from the actual number of parked cars, to the number of vehicles which is the difference after subtracting the determination minimum threshold from the determination maximum threshold, is set as the evaluation value used to assign a ranking to each port 50 (step S65).

Furthermore, in step S64, if the actual number of parked cars exceeds the determination maximum threshold (NO in step S64), then the number of vehicles obtained by subtracting the determination maximum threshold from the actual number of parked cars is set as the evaluation value used to assign a ranking to each port 50 (step S66).

Whether or not the evaluation values have been calculated for every port 50 is then determined, and if the evaluation values have not been calculated for every port 50 (NO in step S67), then the next port 50 is specified (step S68), the flow returns to step S61, and the above processing is repeated.

Furthermore, in step S67, if the evaluation values have been calculated for every port 50 (YES in step S67), then the ports50 which require shared vehicles 2 to be moved (vehicle redistribution) are extracted (step S69), and the evaluation value calculation process is completed. The determination as to whether a port 50 requires movement of a shared vehicle 2 involves at least a determination that a port 50 in which the evaluation value shows a negative value requires the addition of a shared vehicle 2 and that a port 50 in which the evaluation value is greater than 1 requires the deduction of a shared vehicle 2.

Table 2 shown below is a table which shows an example of the determination minimum thresholds, determination maximum thresholds, number of vehicles allowed by agreement, and the actual number of parked cars, and also shows the evaluation values calculated by the evaluation value calculation process and the redistribution necessity (whether or not movement of a shared vehicle 2 is necessary) for each port 50 from port A to port E. The evaluation values, based on the abovementioned calculation method of the evaluation value calculation process, came to -3 for port A, 3/4 for port B, +2 for port C. 5/6 for port D, and -1 for port E. Accordingly, ports which require the movement of shared vehicles 2 are port A, port C and port E. Here, port A and port E require additional shared vehicles 2, while port C requires the deduction of shared vehicles 2.

[Table 2]

| | Port Number | Port | Port | Port | Port | Port |
|---|---|---|---|---|---|---|
| Information Type | | A | B | C | D | E |
| Necessity | Minimum Threshold | 2 | 1 | 4 | 1 | 2 |
| Determination | Maximum Threshold | 9 | 5 | 8 | 7 | 5 |
| Number of vehicles allowed by agreement | | 11 | 9 | 9 | 12 | 7 |
| | | | | | | |
| Actual number of parked vehicles | | 0 | 4 | 10 | 6 | 2 |
| Evaluation value | | -3 | 3/4 | +2 | 5/6 | -1 |
| Redistribution Necessity | | Y | N | Y | N | Y |
| | | | | | | |
| Vehicle deduction threshold | | 4 | 2 | 5 | 3 | 3 |

[Table 2]   (continued)

| Port Number | Port | Port | Port | Port | Port |
|---|---|---|---|---|---|
| Information Type | A | B | C | D | E |
| Vehicle addition threshold | 7 | 4 | 7 | 5 | 4 |
|  |  |  |  |  |  |
| Vehicle deduction necessity | N | Y | Y | Y | N |
| Vehicle addition necessity | Y | N | N | N | Y |

The vehicle deduction threshold, vehicle addition threshold, vehicle deduction necessity and vehicle addition necessity listed in Table 2 are described below.

Next, the vehicle movement instruction processing according to step S52 in FIG. 8 is described in detail.

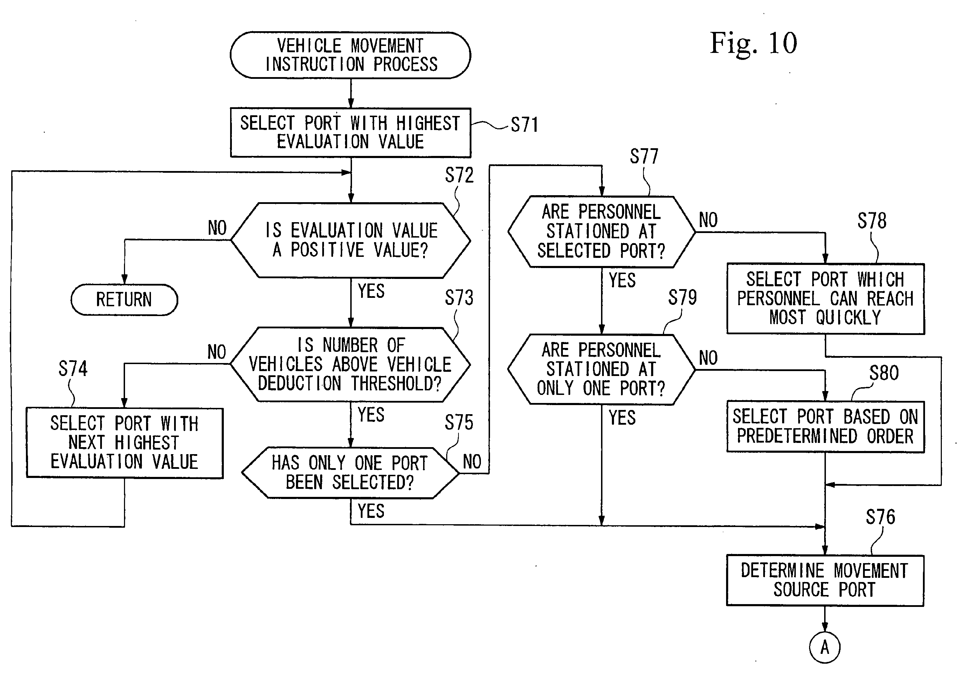

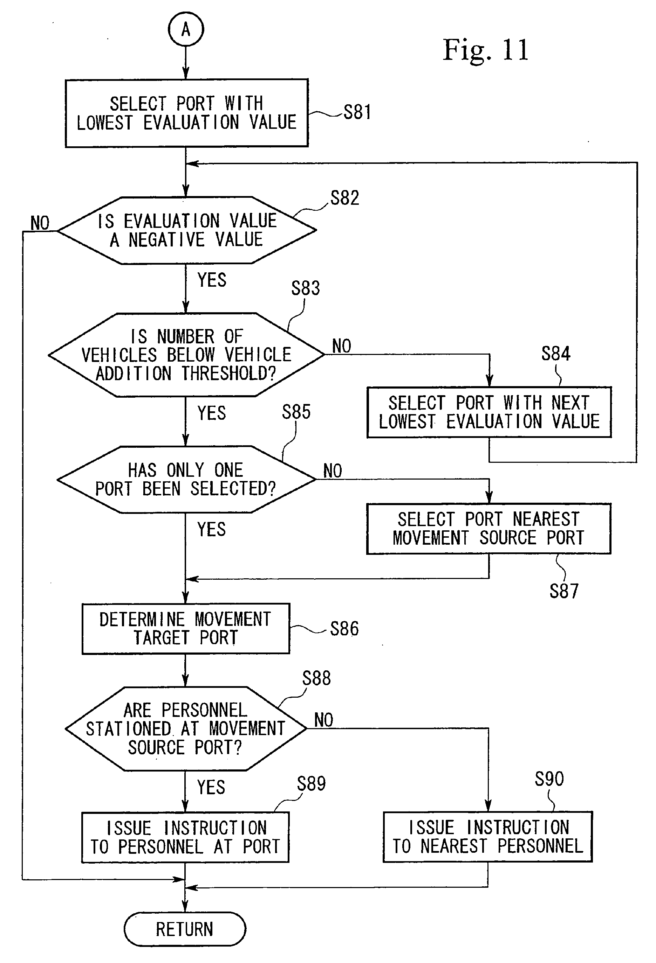

FIG. 10 and FIG. 11 are flowcharts showing vehicle movement instruction processing in which the vehicle administration apparatus 1a outputs a vehicle movement instruction to move a shared vehicle 2 between movement source and movement target ports 50 to the personnel administration server 1b, based on the evaluation values which the vehicle administration apparatus 1a calculates itself.

In FIG. 10 and FIG. 11, first, the control section 11 of the vehicle administration apparatus 1a selects the port 50 for which the evaluation value calculated by the evaluation value calculation processing is the highest (step S71).

Next, whether or not the evaluation value of the selected port 50 is a positive value is determined (step S72), and if the evaluation value is not a positive value (NO in step S72), then the vehicle movement instruction process is terminated, and the flow returns to step S53 in FIG. 8.

Furthermore, in step S72, if the evaluation value is a positive value (YES in step S72), then next whether or not the number of parked shared vehicles 2 at the selected port 50 is higher than the vehicle deduction threshold is determined (step S73).

Here. the vehicle deduction threshold is a value set individually for each port 50. If the number of shared vehicles 2 at a port 50 is below this threshold, in order to give the highest priority to the lending of shared vehicles 2 to "direct riding" users from this port 50, this threshold indicates that movement of a shared vehicle 2 from this port 50 to another port 50 which has insufficient shared vehicles 2 is forbidden, so as not to reduce the number of shared vehicles at this port any further. Accordingly, a port 50 for which the number of actual parked shared vehicles 2 is lower than the vehicle deduction threshold cannot be used as a movement source port for a shared vehicle 2.

Because the determination minimum threshold, the determination maximum threshold, and the vehicle deduction threshold are set individually for each port 50. there can be ports 50 which have a number of vehicles above their vehicle deduction threshold despite having a low evaluation value.

Here, in step S73, if the number of vehicles parked in the selected port 50 is below the vehicle deduction threshold (NO in step S73), then the port 50 with the next highest evaluation value is selected (step S74), the flow returns to step S72, and the above processing is repeated.

On the other hand, in step S73, if the number of vehicles parked in the selected port 50 is above the vehicle deduction threshold (YES in step S73), then next whether or not only one port 50 has been selected is determined (step S75). In step S75, if only one port 50 has been selected (YES in step S75), then this port 50 is set as the movement source port (step S76).

Furthermore, in step S75, if more than one port 50 has been selected (NO in step S75), whether or not personnel 8 are stationed at the selected port 50 is determined (step S77).

In step S77, if no personnel 8 are stationed at the selected ports 50 (NO in step S77), the control section 11 of the vehicle administration apparatus 1a acquires the placement status of the personnel 8 from the personnel administration server 1b, selects the port 50 which personnel 8 can reach from another port the most quickly as a candidate for the movement source port (step S78), and sets this port 50 as the movement source port (step S76).

Furthermore, in step S77, if it is determined that personnel 8 are stationed at the selected port 50 (YES in step S77), then whether or not there is only one port 50 at which personnel 8 are stationed is determined (step S79).

In step S79, if there is only one port 50 at which personnel 8 are stationed (YES in step S79), then this port 50 is set as the movement source port (step S76).

Furthermore, in step S79, if there is more than one port 50 at which personnel 8 are stationed (NO in step S79), then a port is selected according to a predetermined order (step S80), and this port is set as the movement source port (step S76).

Once the movement source port is determined, next the port 50 for which the evaluation value is lowest is selected (step S81).

Next, whether or not the evaluation value of the selected port 50 is a negative value is determined (step S82), and if the evaluation value is not a negative value (NO in step S82), then the vehicle movement instruction process is terminated, and the flow returns to step S53 in FIG. 8.

Furthermore, in step S82, if the evaluation value is a negative value (YES in step S82), then next whether or not the number of shared vehicles 2 parked in the selected port 50 is less than the vehicle addition threshold is determined (step S83).

Here, the vehicle addition threshold is a value which is set individually for each port 50. If the number of shared vehicles 2 at a port 50 exceeds this threshold, in order to give the highest priority to users returning shared vehicles 2 to this port 50, this threshold indicates that movement of shared vehicles 2 to this port 50 from another port 50 which has surplus shared vehicles 2 is forbidden, so that the number of shared vehicles 2 at this port 50 is not further increased. Accordingly, ports 50 in which the actual number of parked shared vehicles 2 is higher than the vehicle addition threshold cannot be used as a movement target port for shared vehicles 2.

Because the determination minimum threshold, the determination maximum threshold, and the vehicle addition threshold are set individually for each port 50, there can be ports 50 which have a number of vehicles below their vehicle addition threshold despite having a high evaluation value.

In step S83, if the number of shared vehicles 2 parked in the selected port 50 is above the vehicle addition threshold (NO in step S83), then the port 50 with the next lowest evaluation value is selected (step S84), the flow returns to step S82, and the above processing is repeated.

On the other hand, in step S83, if the number of shared vehicles 2 parked in the selected port 50 is lower than the vehicle addition threshold (YES in step S83), then next, whether or not only one port 50 has been selected is determined (step S85).

In step S85, if only one port 50 has been selected (YES in step S85), then this port is set as the movement target port 50 for shared vehicles 2 (step S86).

In step S85, if more than one port 50 has been selected (NO in step S85), then the port 50 which is closest to the movement source port 50 is selected as a candidate for the movement target port (step S87), and this port 50 is set as the movement target port 50 for shared vehicles 2 (step S86).

Then, whether or not personnel 8 are stationed at the movement source port 50 is determined (step S88), and if personnel 8 are stationed at the movement source port 50 (YES in step S88), then an instruction for the personnel 8 at this port 50 to move the shared vehicle 2 is output to the personnel administration server 1b (step S89), and the vehicle movement instruction process is completed.

Furthermore, in step S88, if personnel 8 are not stationed at the movement source port 50 (NO in step S88), then an instruction for the personnel 8 at a location (port) closest to the movement source port 50 to move the shared vehicle 2 is output to the personnel administration server 1b (step S90), and the vehicle movement instruction processing is completed.

In Table 2 above are shown, in addition to the actual number of vehicles parked in each port 50, examples of the vehicle deduction threshold and the vehicle addition threshold, and the vehicle deduction viability (whether or not vehicles can be deducted, whether or not the port can be used as the movement source port) and vehicle addition viability (whether or not vehicles can be added, whether or not the port can be used as the movement target port) as determined by the vehicle movement instruction processing, for each port 50 from port A to port E.

According to the determinations made in the vehicle movement instruction processing described above, port A and port E can only accept additional shared vehicles 2, and can therefore only be used as the movement target port. Furthermore, from port B, port C and port D, shared vehicles 2 can only be deducted, and they can therefore only be used as the movement source port.

A shared vehicle distribution instruction apparatus in which shared vehicles are moved preferentially from the port (parking region) where the highest number of vehicles are parked was described above as the fourth embodiment of the invention.

In the present embodiment, the control section 11 of the vehicle administration apparatus 1a constitutes the evaluation value calculation device and the vehicle movement instruction device. More specifically, steps S61 to S69 in FIG. 9 correspond to the evaluation value calculation device, and steps S71 to S90 in FIG. 10 correspond to the vehicle movement instruction device.

As described above, according to the shared vehicle distribution instruction apparatus of the present embodiment, by moving shared vehicles 2 preferentially from the port 50 which has the highest evaluation value and has a surplus of shared vehicles 2, an effect is obtained that in a port where the number of vehicles in the port 50 exceeds the number allowed by agreement and vehicles occupy parking regions allocated to ordinary vehicles, dissatisfaction of others (people other than the users of the shared vehicle system) who are unable to park ordinary vehicles can eliminated quickly, and the shared vehicle system can be operated properly.

[Fifth Embodiment]

Next, a shared vehicle distribution instruction apparatus according to a fifth embodiment of the invention is described.

In the fifth embodiment, a shared vehicle distribution instruction apparatus in which vehicles are moved preferentially to the parking region with the lowest number of parked cars is described.

With the exceptions of the shared vehicle distribution instruction apparatus and shared vehicle movement instruction processing, the operation and the construction of the apparatus in the fifth embodiment is the same as that of the shared vehicle distribution instruction apparatus according to the first through fourth embodiments, and as such description thereof is omitted, and the vehicle movement instruction processing in the shared vehicle distribution apparatus of the present embodiment is described in detail.

In the fifth embodiment, in order to move shared vehicles preferentially to the port (parking region) where the lowest number of shared vehicles is parked, in the vehicle movement instruction processing mentioned above, the movement target port may be determined before the movement source port.

In other words, in the flow chart showing the vehicle movement processing described using FIG. 10 and FIG. 11 for moving a shared vehicle preferentially from a port (parking region) where the highest number of cars are parked, the process from step S81 to step S87 to determine the movement target port may be executed before the process from step S71 to step S80 to determine the movement source port. Specifically, after executing sequentially the steps from step S81 to step S87, the steps from step S71 to step S80 may be executed sequentially, followed by the steps from step S88 to step S90.

As described above, according to the shared vehicle distribution instruction apparatus of the present embodiment, an effect can be obtained in that by moving shared vehicles 2 preferentially to the port 50 for which the evaluation value is the lowest which is lacking in shared vehicles, dissatisfaction of users resulting when a user cannot borrow a shared vehicle 2 from a port 50 which is lacking in shared vehicles 2 can be eliminated quickly, thereby improving customer satisfaction.

[Sixth Embodiment]

Next, a shared vehicle distribution instruction apparatus according to a sixth embodiment of the invention is described.

In the sixth embodiment, a shared vehicle distribution instruction apparatus is described in which; a vehicle movement instruction for moving a shared vehicle preferentially from the parking region where the highest number of cars are parked, and a vehicle movement instruction for moving a vehicle preferentially to the parking region where the lowest number of cars are parked, are issued alternately.

Because the construction of the shared vehicle distribution instruction apparatus is the same as that of the shared vehicle distribution instruction apparatus according to the first through fifth embodiments, description thereof is omitted, and the vehicle movement instruction processing in the shared vehicle distribution instruction apparatus of the present embodiment is described in detail.

According to the sixth embodiment, in the flow chart showing the inter-port shared vehicle movement instruction procedure described in the fourth embodiment using FIG. 8, each time an instruction for personnel 8 to move a shared vehicle is output to the personnel administration server 1b in step S53, an action of moving a shared vehicle preferentially from the parking region at which the highest number of shared vehicles are parked, and an action of moving a vehicle preferentially to the parking region at which the lowest number of shared vehicles are parked, may be repeated alternately.

In other words, each time an instruction for personnel 8 to move a shared vehicle 2 is output to the personnel administration server 1b, in step S52, the vehicle movement instruction processing in steps S71 to S90 described using FIG. 6 and FIG. 7 in the fourth embodiment, and the vehicle movement instruction processing of the fifth embodiment, may be performed alternately.

As described above, according to the shared vehicle distribution apparatus of the present embodiment, by alternating between moving a shared vehicle 2 preferentially from the port 50 which has the highest evaluation value and has a surplus of shared vehicles, and moving a shared vehicle 2 preferentially to the port 50 which has the lowest evaluation value and which is lacking in shared vehicles, the dissatisfaction of others (people other than the users of the shared vehicle system) which results when ordinary vehicles cannot be parked because the spaces are occupied by shared vehicles 2, and dissatisfaction of users which occurs when a lack of shared vehicles 2 means that a user cannot borrow a shared vehicle 2 can both be prevented, so that there is an effect that the shared vehicle system can be operated with improved customer satisfaction, without inconveniencing others who are not users of the shared vehicle system.

In the fourth through sixth embodiments, cases were described in which inter-port shared vehicle movement instructions are issued with thresholds only applied to the number of parked shared vehicles 2. However, even if the shared vehicles are administered so that the optimal number of shared vehicles 2 are provided at the locations where they are required, if the placement of the personnel 8 is not taken into consideration. there is a possibility that suitable personnel 8 who can move the shared vehicle 2 cannot be assigned even if the shared vehicle movement instruction is calculated accurately, or that when a shared vehicle 2 movement instruction is issued without considering the personnel 8 and the shared vehicle 2 despite the fact that personnel 8 are currently moving a shared vehicle 2 to the targeted port 50 which is lacking in shared vehicles 2, the targeted port is processed as if it is lacking in shared vehicles 2, and an unnecessary instruction is issued to move a new shared vehicle 2.

Here, a system may be used in which a threshold for the movement of personnel 8 to a port 50 with a surplus of shared vehicles 2, which relates the number of parked shared vehicles 2, is newly applied for each port, and if the number of shared vehicles 2 at any port 50 becomes scarce, an instruction is issued to the personnel 8, so that any personnel 8 who are to move a shared vehicle 2 from the port 50 which has a surplus of shared vehicles 2 at which personnel 8 are not present to this port 50 which is lacking in shared vehicles 2, move to the port 50 which has the surplus of shared vehicles 2.

Furthermore, if the number of shared vehicles 2 parked at a port 50 is administered based only on the number of parked shared vehicles 2 which are in working order. the number of parking lots 51 occupied by vehicles which are out of order cannot be calculated, making it possible to run out of spaces in the port 50 where shared vehicles 2 can be parked.

Accordingly, it is preferable that the shared vehicles 2 which are out of order are included when counting the shared vehicles 2, a threshold is assigned for each port 50 indicating how many out of order vehicles can be parked at the port 50, and an instruction is issued to personnel 8 to quickly move non out of order vehicles parked at ports 50 which exceed this threshold, to a maintenance facility or the like.

[Seventh Embodiment]

Next, a control apparatus for vehicle reservation which controls usage reservations for shared vehicles according to the number of available shared vehicles distributed between ports as appropriate using the shared vehicle distribution instruction apparatus above is described.

Since the construction of the control apparatus for vehicle reservation is the same as that of the shared vehicle distribution instruction apparatus according to first through sixth embodiments, description thereof is omitted, and the vehicle reservation processing in the control apparatus for vehicle reservation of the present embodiment is described in detail. Furthermore, in the construction of the shared vehicle distribution instruction apparatus according to the seventh embodiment, the personnel administration server 1b used in the shared vehicle distribution instruction apparatus according to the first through sixth embodiments is not required and therefore need not be provided.

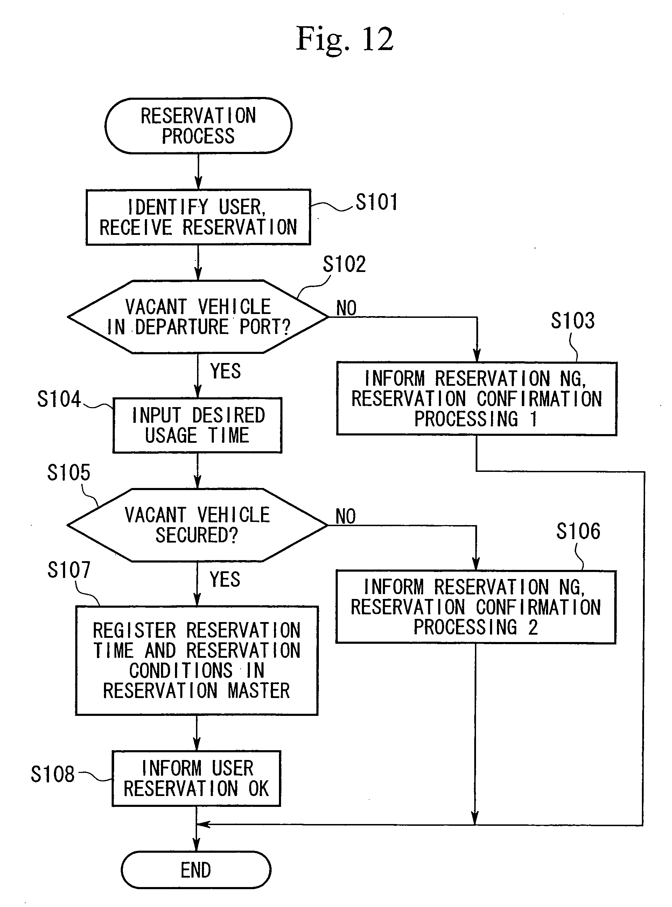

First is a detailed description of the reservation processing for renting a shared vehicle to a user in a shared vehicle system of the present embodiment, using the flow chart in FIG. 12.

Firstly, when a user A3 accesses the vehicle administration apparatus 1a via the communication network 7 using the portable terminal 4, the control unit 11 in the vehicle administration apparatus 1a asks the user A3 for user identification via the portable terminal 4, and prompts the user A3 to input reservation conditions for the reservation process to receive (step S101). Here, reservation conditions means information for selecting a shared vehicle 2 to rent, such as departure port, arrival port, usage day, usage time, desired vehicle type and the like. In addition, vehicle type means a classification to distinguish a vehicle, such as vehicle type (type of car body), engine, transmission (for example, AT/MT), type of power transmission function such as two-wheel drive/four-wheel drive, existence of equipment such as sunroof and the like, color of car body, and the like.

Next, the control unit 11 determines whether there is a vacant vehicle in the departure port or not by reference to the port master 15 and the reservation master 17 (step S102).

In step S102, in the case where there is no vacant vehicle in the departure port (NO in step S102), the control unit 11 sends the user A3 a message, "reservation NG" via the portable terminal 4, proceeds to reservation confirmation processing 1, performs processing as requested by the user A3, such as waiting for a vacant vehicle, canceling the reservation, or the like, and finishes the reservation processing operation (step S103).

Furthermore, in step S102, in the case where there is a vacant vehicle in the departure port (YES in step S102), it prompts the user A3 to input the desired usage time (reservation start time, reservation finish time) (step S104).

Next. the control unit 11 determines whether it is possible to secure a vacant vehicle for the desired usage time input by the user A3 (step S105).

In step S105, in the case where it is not possible to secure a vacant vehicle for the desired usage time input by the user A3 (NO in step S105), the control unit 11 sends the user A3 a message "reservation NG" via the portable terminal 4, proceeds to reservation confirmation processing 2, performs processing as requested by the user A3, such as waiting for a vacant vehicle, changing the reservation time, canceling the reservation, or the like, and finishes the reservation processing operation (step S106).

Furthermore, in step S105, in the case where a vacant vehicle can be secured for the desired usage time input by the user A3 (YES in step S105), the desired usage time, and the reservation conditions described above are stored in the reservation master 17, associating the user ID of the user A3 who has requested the reservation and the vehicle number of the secured shared vehicle 2 (step S107).

Moreover, a message, "reservation OK", and the number of the reserved vehicle are transmitted to the portable terminal 4 of the user A3 who has requested the reservation (step S108), and the reservation processing operation is finished.

Next, reservation acceptance control processing for controlling the acceptance or rejection of shared vehicle usage reservations in the shared vehicle system of the present embodiment is described in detail.

In the vehicle administration apparatus 1a, the control section 11 executes the reservation acceptance control processing at regular intervals, and monitors whether or not a reservation can be received from a user A.

In other words, the control section 11 of the vehicle administration apparatus 1a recognizes the scheduled movement times and status of the shared vehicles 2 by referring to the vehicle master 14, the port master 15 and the reservation master 17, and determines, based on positional information for the shared vehicles reported from the shared vehicle 2 using a GPS, whether or not there are unreturned vehicles which will not be returned to the port 50 on time (step S111).

In step S111, if there are unreturned vehicles which will not be returned to the port 50 on time (YES in step S111), then the number of unreturned vehicles is counted and assigned to a variable M (step S112), and the flow proceeds to step S113.

On the other hand, in step S111, if there are no unreturned vehicles (NO in step S111), then no further action is taken and the flow proceeds to step S113.

Next, in step S113, a search is carried out to find whether or not there are shared vehicles 2 which are reporting faults, by referring to the vehicle master 14 and the port master 15, and whether or not there are new vehicles to be repaired is determined (step S113).

In step S113, if there are new vehicles to be repaired in which faults were discovered (YES in step S113), then the number of new vehicles to be repaired is counted and assigned to a variable N (step S114), and the flow proceeds to step S115.

Next, in step S115, referring to the vehicle master 14 and the port master 15, whether or not there are reversion vehicles which will revert to usable vehicles when repairs are completed or which will revert to usable vehicles after being returned late to the port is determined (step S115).

In step S115, if there are reversion vehicles (YES in step S115), then the number of reversion vehicles is counted and assigned to a variable R (step S116), and the flow proceeds to step S117.

On the other hand, in step S115, if there are no reversion vehicles (NO in step S115), then no further action is taken and the flow proceeds to step S117.

Once the variables M, N and R are set, in step S117, the number of shared vehicles which are available for use on schedule (effective number of vehicles X = total number of shared vehicles A - (M + N) + R) is calculated (step S117).

Next, whether or not there is any variation in any of the variables M, N or R is determined (step S118).

In step S118, if there is no variation in any of the variables M, N or R (NO in step S118), then the control section 11 of the vehicle administration apparatus 1a terminates this iteration of the reservation acceptance control process.

Furthermore, in step S118, if there is variation in any of the variables M, N or R (YES in step S118), then whether or not the value of the effective number of vehicles X had reduced from when it was calculated previously is determined (step S119).

In step S119, if the effective number of vehicles X had reduced since the previous calculation (YES in step S119), then the acceptance of reservation requests from users A3 through the reservation process is suspended (step S120).

Reservation and distribution are then recalculated based on the changed effective number of vehicles X (step S121).

Furthermore, in step S119, if the effective number of vehicles X had not reduced since the previous calculation (NO in step S118), then the control section 11 of the vehicle administration apparatus 1a does not suspend accepting reservation requests from users A3 through the reservation process, and the flow proceeds to step S121, and reservation and distribution are then recalculated based on the changed effective number of vehicles X (step S121).

Next, whether or not there are shared vehicles 2 available for lending is determined (step S122), and if there are shared vehicles 2 available for lending (YES in step S122), then the acceptance of usage reservations from users A3 through the reservation process is resumed (step S123).

In step S122, if there are no shared vehicles 2 available for lending (NO in step S122), then the control section 11 of the vehicle administration apparatus 1a terminates this iteration of the reservation acceptance control process.

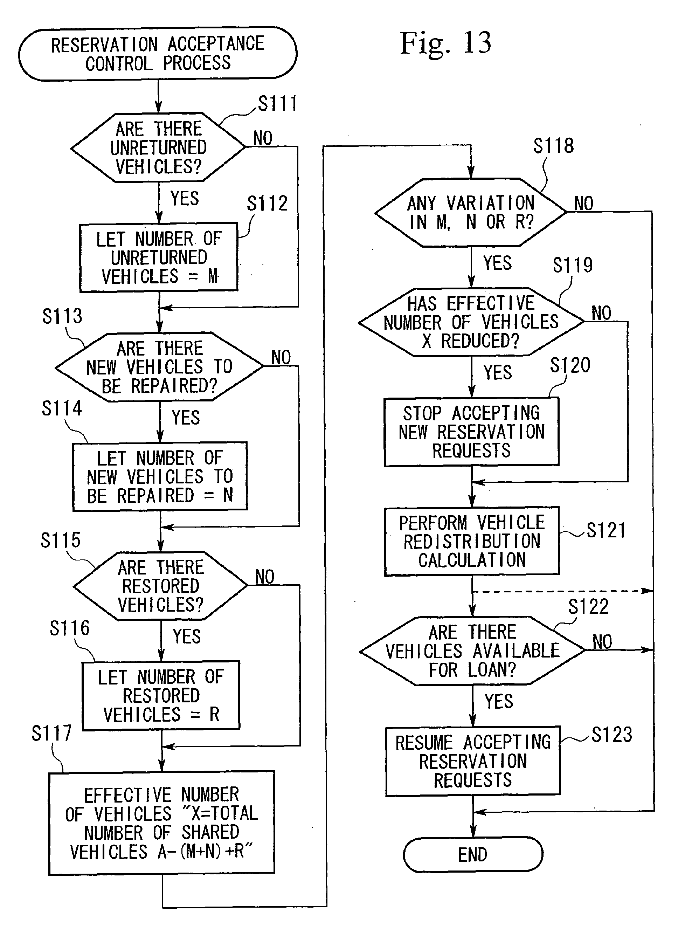

As indicated by the dashed line in FIG. 13, steps 122 and 123 do not need to be executed.

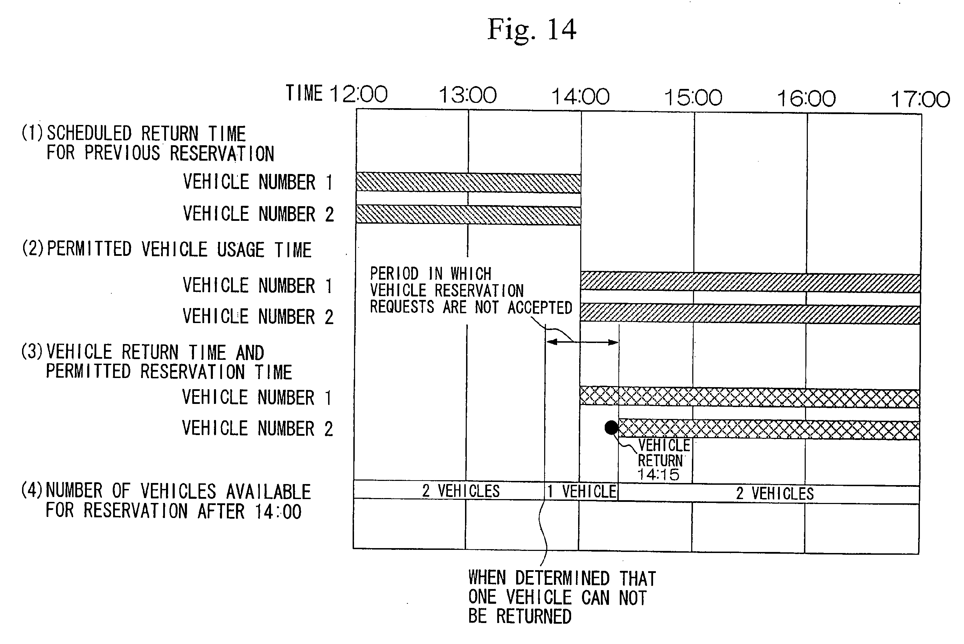

In other words, according to the reservation acceptance control process, as shown in FIG. 14, (1) when the scheduled return time of the reservation of previous users A3 of the shared vehicles numbered vehicle 1 and vehicle 2 is 14:00, (2) the time at which the vehicle becomes available for use is from 14:00. However, (4) from the point in time when it is determined that the vehicle numbered vehicle 2 will not be able to be used on schedule (has not returned to the port), the number of vehicles available for use is counted as 1, and a reservation request acceptance termination period is entered for the vehicle which cannot be used on schedule (has not returned to the port), and (3) at the point in time when the shared vehicle numbered vehicle 2 is returned to the port at 14:15, the number of shared vehicles available for use is counted as 2, and the usage reservation process is restored to its normal state.

In the present embodiment, the control section 11 of the vehicle administration apparatus 1a constitutes the reservation administration device, the shared vehicle administration device and the reservation acceptance control device. More specifically, steps S101 to S108 in FIG. 12 correspond to the reservation administration device, steps S111 to S117 in FIG. 13 correspond to the shared vehicle administration device, and steps S118 to S123 in FIG. 13 correspond to the reservation acceptance control device.

As described above, according to the control apparatus for vehicle reservation of the present embodiment, in the usage reservation of a shared vehicle 2. if it is discovered by the control section 11 of the vehicle administration apparatus 1a that for some reason a shared vehicle 2 cannot be used on schedule, the control section 11 suspends the acceptance of reservation requests for the shared vehicle 2 made by the user A3, and when the shared vehicle 2 which could not be used is reverted making a shared vehicle 2 available for lending, the control section 11 resumes the acceptance of reservation requests from users A3. As a result, not being able to lend vehicles on schedule because of a reduction in the number of shared vehicles 2 available for use can be prevented.

Accordingly, an effect in obtained in that inconvenience caused to the user A3 for example when a shared vehicle 2 cannot actually be lent despite a reservation being accepted from the user A3 can be eliminated, and the reservation process can be realized accurately, allowing the convenience for the user A3 to be improved.

As described above, according to the first aspect of the distribution instruction apparatus for shared vehicles, by estimating the numbers of excess shared vehicles and lacking shared vehicles for each parking region after a predetermined time by an evaluation value calculation device, and calculating the degree of necessity of shared vehicle movement for each parking region as a numerical value called an evaluation value using the numbers of excess shared vehicles and lacking shared vehicles, instructions can be issued to move shared vehicles between the parking regions taking the degree of necessity of vehicle movement for each parking region properly into consideration.

Accordingly, an effect is obtained in that disparity between the number of shared vehicles at a plurality of parking regions can be eliminated, and the shared vehicle system can be operated properly so that a user can use a shared vehicle at any parking region at his or her convenience.

Specifically, an effect is obtained in that in a case when a portion of an ordinary parking facility is reserved as a parking region for shared vehicles, a problem wherein there are too many shared vehicles for a given parking region to the extent that they begin to occupy the region reserved for ordinary vehicles can be prevented from occurring, and the system can be operated also to the satisfaction of people other than the users of the shared vehicle system.

According to the second aspect of the distribution instruction apparatus for shared vehicles, by evaluating properly the degree of necessity of vehicle movement for each parking region based on a first and second evaluation value, the setting of a parking region which appears to be approaching a lack of shared vehicles after a predetermined time as the movement source parking region, and the setting of a parking region which appears to be approaching a surplus of shared vehicles after a predetermined time as the movement target parking region, can be prevented.

Accordingly, by moving shared vehicles from the parking region most likely to inconvenience people other than the users of the shared vehicle system to the parking region where the users of the shared vehicle system are most likely to require additional shared vehicles, an effect is obtained that problems can be efficiently prevented from occurring during the operation of the shared vehicle system.

According to the third aspect of the distribution instruction apparatus for shared vehicles, by giving priority to those parking regions where personnel who can move the shared vehicles are stationed when setting the movement source parking region, the movement of a shared vehicle can be completed in a short period of time.

Accordingly, an effect is obtained in that in a parking region particularly lacking in shared vehicles, dissatisfaction of users caused for example when the user cannot borrow a shared vehicle can be eliminated promptly, and customer satisfaction can be improved.

According to the fourth aspect of the distribution instruction apparatus for shared vehicles, by evaluating the number of parked shared vehicles using a first and second threshold, and calculating the degree of necessity of vehicle movement for each parking region as a numerical value called an evaluation value, instructions can be issued to move shared vehicles between the parking regions taking the degree of necessity of vehicle movement for each parking region into consideration properly.

Accordingly, an effect is obtained in that disparity between the number of shared vehicles at a plurality of parking regions can be eliminated, and the shared vehicle system can be operated properly so that a user can use a shared vehicle at any parking region at his or her convenience.

Specifically, an effect is obtained in that in a case when a portion of an ordinary parking facility is reserved as a parking region for shared vehicles, a problem wherein there are too many shared vehicles for a given parking region to the extent that they begin to occupy the region reserved for ordinary vehicles can be prevented, and the dissatisfaction of people other than the users of the shared vehicle system can be eliminated.

According to the fifth aspect of the distribution instruction apparatus for shared vehicles, instructions can be issued to move shared vehicles from the parking region determined to have the most sufficient number of shared vehicles to the parking region determined to be the most lacking in shared vehicles.

Accordingly, by moving shared vehicles from the parking region considered to cause the most inconvenience to people other than the users of the shared vehicle system, to the parking region where the users of the shared vehicle system most require shared vehicles, problems which occur during the operation of the shared vehicle system can be eliminated efficiently.

According to the sixth aspect of the distribution instruction apparatus for shared vehicles, the setting of parking regions which appear to be approaching a lack of shared vehicles as the movement source parking region, and the setting of parking regions which appear to be approaching a surplus of shared vehicles as the movement target parking region can be prevented using the third and fourth threshold.

Accordingly, an effect is obtained in that the issuing of unnecessary movement instructions to move shared vehicles between two parking regions lacking in shared vehicles or between two parking regions with an excess of shared vehicles can be prevented, and the shared vehicle system can be operated properly.

According to the seventh aspect of the distribution instruction apparatus for shared vehicles, by giving priority to parking regions where personnel who can immediately move a shared vehicle are stationed, when setting the movement source parking region, the movement of shared vehicles can be completed in a short period of time.

Accordingly, an effect is obtained in that in a parking region particularly lacking in shared vehicles, dissatisfaction of users caused for example when the user cannot borrow a shared vehicle, can be eliminated promptly, and customer satisfaction can be improved.

According to the eight through tenth aspects of the control apparatus for vehicle reservation, in the usage reservation for a shared vehicle, when variation is detected in the number of shared vehicles by the shared vehicle administration device, a vehicle redistribution calculation for the vehicles administered by the reservation administration device is carried out. At this time, specifically, if a shared vehicle which for some reason cannot be used on schedule is found, based on the calculation results of the vehicle redistribution device, the reservation acceptance control device stops accepting reservation requests made by users through the reservation administration device. Furthermore, when previously unusable shared vehicles are reverted, allowing a shared vehicle to be made available for lending, the reservation acceptance control device resumes the acceptance of usage reservations from users. As a result, cases in which vehicles cannot be lent on schedule because of a reduction in the number of shared vehicles available for use can be prevented.

Accordingly, there are effects that user convenience is improved, shared vehicles are used effectively, and a shared vehicle system can be operated effectively.

A shared vehicle distribution instruction apparatus instructs the movement of shared vehicles between ports appropriately.

When instructions are issued to personnel 8 to move a shared vehicle 2 so that bias does not occur in the number of parked shared vehicles 2 between a plurality of ports, first a vehicle administration apparatus 1a, in order to ascertain accurately an excess or lack status of shared vehicles 2 for each port, estimates the number of shared vehicles 2 parked at each port after a predetermined time, and performs evaluation value calculation processing for assigning a ranking for shared vehicle 2 movement to every port. Next the vehicle administration apparatus 1a determines from which port to which port a shared vehicle 2 should actually be moved by an evaluation value based on the estimated vehicle number, and outputs vehicle movement instructions to an administration server 1 to move the shared vehicle 2 between a movement source and a movement target port. Then, a personnel administration server 1b communicates the shared vehicle 2 movement instruction received from the vehicle administration apparatus 1a to a portable terminal 9 carried by the personnel 8 via a communications network 7.

**Claims**

1. A shared vehicle distribution instruction apparatus for a shared vehicle system in which shared vehicles (2) parked in a parking region (50) are administered and the shared vehicles are lent to users, wherein the apparatus issues instructions for the movement of said shared vehicles (2) between a plurality of said parking regions in order to maintain a suitable number of parked cars for said shared vehicles readied at said plurality of parking regions which exist at different geographical locations, comprising:

an evaluation value calculation device (S61 - S69) which sets for each parking region for the number of said parked cars, a first threshold value indicating a lower limit for determining whether or not vehicle movement is necessary, and a second threshold value indicating an upper limit for determining whether or not vehicle movement is necessary; and

a vehicle movement instruction device (S71 - S90) which determines a movement source parking region and a movement target parking region for said shared vehicle based on said evaluated values, and issues a vehicle movement instruction to move said shared vehicle from said movement source parking region to said movement target parking region

**characterized in that**

said vehicle movement instruction device gives priority to said parking regions where personnel who can move said shared vehicles are stationed when setting said movement source parking region.

2. A shared vehicle distribution instruction apparatus according to claim 1, wherein said vehicle movement instruction device

determines said parking regions (50) has a number of said shared vehicles (2) closest to the sufficient number based on said evaluation value to be the movement source parking region for said shared vehicles, and

determines which of said parking regions (50) has the greatest deficit of said shared vehicles (2) based on said evaluation value to be the movement target parking region for said shared vehicles.

3. A shared vehicle distribution instruction apparatus according to claim 1, wherein said vehicle movement instruction device (S71 - S90)

sets for each parking region (50) for the number of said parked cars, a third threshold value indicating a lower limit for determining whether or not vehicle movement is possible, and a fourth threshold value indicating an upper limit for determining whether or not vehicle movement is possible;

determines which of said parking regions (50) where the number of parked cars exceeds said third threshold value and it is therefore determined to be possible to deduct shared vehicles, is the number of shared vehicles which is closest to the sufficient number based on said evaluation values, said movement source parking region for said shared vehicles; and

determines which of said parking regions (50) where the number of parked cars is lower than said fourth threshold value and it is therefore determined to be possible to add shared vehicles, has the greatest deficit in shared vehicles based on said evaluation values, to be said movement target parking region for said shared vehicles.

# Fig. 1

Fig. 2

Fig. 3

EP 1 503 358 A1

## Fig. 4

```
        ┌─────────────┐
        │    START    │
        └─────────────┘
               │
               ▼
        ┌─────────────────┐
        │  START VEHICLE  │
        │ REDISTRIBUTION  │───── S1
        │    PROGRAM      │
        └─────────────────┘
               │
               ▼
           ╱───────────────╲                    S2
    NO   ╱  CAN PERSONNEL   ╲
  ◄─────◄   BE SECURED TO    ►
         ╲ REDISTRIBUTE VEHICLE?╱
           ╲───────────────╱
               │ YES
               ▼
        ┌─────────────────┐
        │PERFORM EVALUATION│
        │VALUE CALCULATION │───── S3
        │    PROCESS       │
        └─────────────────┘
               │
               ▼
           ╱───────────────╲                    S4
    NO   ╱  ARE THERE PORTS ╲
  ◄─────◄     REQUIRING      ►
         ╲  REDISTRIBUTION? ╱
           ╲───────────────╱
               │ YES
               ▼
        ┌─────────────────┐
        │ PERFORM VEHICLE │
        │    MOVEMENT     │───── S5
        │INSTRUCTION PROCESS│
        └─────────────────┘
               │
               ▼
        ┌─────────────────┐
        │ISSUE INSTRUCTION│───── S6
        │  TO PERSONNEL   │
        └─────────────────┘
               │
               ▼
        ┌─────────────┐
        │     END     │
        └─────────────┘
```

# Fig. 5

```
      ┌─────────────────────────┐
      │   EVALUATION VALUE       │
      │   CALCULATION PROCESS    │
      └────────────┬────────────┘
                   │
      ┌────────────▼────────────┐
┌────▶│   ACQUIRE VEHICLE        │──── S11
│     │  INFORMATION FOR PORTS   │
│     └────────────┬────────────┘
│                  │
│     ┌────────────▼────────────┐
│     │   ACQUIRE STATISTICAL    │──── S12
│     │  INFORMATION FOR PORTS   │
│     └────────────┬────────────┘
│                  │
│     ┌────────────▼────────────┐
│     │   ACQUIRE PERSONNEL      │──── S13
│     │     INFORMATION          │
│     └────────────┬────────────┘
│                  │
│     ┌────────────▼────────────┐
│     │   CALCULATE EXCESS       │──── S14
│     │   VEHICLE NUMBER         │
│     │   EVALUATION VALUE       │
│     └────────────┬────────────┘
│                  │
│     ┌────────────▼────────────┐
│     │   CALCULATE LACKING      │──── S15
│     │   VEHICLE NUMBER         │
│     │   EVALUATION VALUE       │
│     └────────────┬────────────┘
│                  │              S16
│              ╱───▼───╲
│            ╱  HAVE     ╲  YES
│           ◀  EVALUATION  ▶─────────────┐
│            ╲ VALUES ...  ╱              │
│              ╲─────────╱                │
│                  │ NO                   │  S18
│     ┌────────────▼────────────┐    ┌────▼────────────────┐
└─────│   SPECIFY NEXT PORT      │    │  EXTRACT PORT FOR   │
      └─────────────────────────┘    │ VEHICLE REDISTRIBUTION│
                 S17                  └────────┬────────────┘
                                          ┌────▼────┐
                                          │ RETURN  │
                                          └─────────┘
```

EVALUATION VALUE CALCULATION PROCESS

ACQUIRE VEHICLE INFORMATION FOR PORTS — S11

ACQUIRE STATISTICAL INFORMATION FOR PORTS — S12

ACQUIRE PERSONNEL INFORMATION — S13

CALCULATE EXCESS VEHICLE NUMBER EVALUATION VALUE — S14

CALCULATE LACKING VEHICLE NUMBER EVALUATION VALUE — S15

HAVE EVALUATION VALUES BEEN CALCULATED FOR EVERY PORT? — S16

YES

NO

SPECIFY NEXT PORT — S17

EXTRACT PORT FOR VEHICLE REDISTRIBUTION — S18

RETURN

Fig. 6

VEHICLE MOVEMENT
INSTRUCTION PROCESS

SELECT PORT WITH HIGHEST
EXCESS VEHICLE NUMBER
EVALUATION VALUE — S21

IS EXCESS VEHICLE
NUMBER EVALUATION
VALUE A POSITIVE
VALUE? — S22

NO → RETURN

YES

IS LACKING VEHICLE
NUMBER EVALUATION
VALUE A NEGATIVE
VALUE? — S23

NO

S24

SELECT PORT WITH
NEXT HIGHEST EXCESS
VEHICLE NUMBER
EVALUATION VALUE

YES

S25

HAS ONLY ONE PORT
BEEN SELECTED?

NO

YES

S27

ARE PERSONNEL
STATIONED AT
SELECTED PORT?

NO → S28

SELECT PORT WHICH
PERSONNEL CAN REACH
MOST QUICKLY

YES

S29

ARE PERSONNEL
STATIONED AT
ONLY ONE PORT?

NO

YES

S30

SELECT PORT BASED ON
PREDETERMINED ORDER

DETERMINE MOVEMENT
SOURCE PORT — S26

A

EP 1 503 358 A1

Fig. 7

(A)

↓

SELECT PORT WITH LOWEST
LACKING VEHICLE NUMBER
EVALUATION VALUE — S31

↓

S32
IS LACKING VEHICLE
NUMBER EVALUATION VALUE
A NEGATIVE VALUE? ── NO

YES ↓

S33
IS EXCESS VEHICLE
NUMBER EVALUATION VALUE
A NEGATIVE VALUE? ── NO

S34
SELECT PORT WITH NEXT
LOWEST LACKING VEHICLE
NUMBER EVALUATION VALUE

YES ↓

S35
HAS ONLY ONE
PORT BEEN SELECTED? ── NO

SELECT PORT NEAREST TO
MOVEMENT SOURCE PORT

S37

YES ↓

DETERMINE MOVEMENT
TARGET PORT ── S36

↓

S38
ARE PERSONNEL
STATIONED AT MOVEMENT
SOURCE PORT? ── NO

S40
ISSUE INSTRUCTION
TO NEAREST PERSONNEL

YES ↓

S39
ISSUE INSTRUCTION
TO PERSONNEL AT PORT

↓

RETURN

# Fig. 8

```
         START

    PERFORM EVALUATION
    VALUE CALCULATION      ～S51
        PROCESS

    PERFORM VEHICLE
  MOVEMENT INSTRUCTION     ～S52
        PROCESS

       COMMUNICATE
       INSTRUCTION         ～S53
      TO PERSONNEL
```

Fig. 9

```
   ┌─────────────────────────┐
   │   EVALUATION NUMBER     │
   │   CALCULATION PROCESS   │
   └─────────────────────────┘
                │
                ▼
   ┌─────────────────────────┐
   │  ACQUIRE NUMBER OF      │── S61
   │  VEHICLES PARKED AT PORT│
   └─────────────────────────┘
                │
                ▼  S62
   ╱ IS NUMBER HIGHER THAN   ╲    NO
  ╱  NECESSITY DETERMINATION  ╲──────────────┐
   ╲ MINIMUM THRESHOLD?      ╱                │
    ╲───────────────────────╱                 │
                │ YES                          ▼
                │              ┌─────────────────────────────┐ S63
                │              │ SUBTRACT NUMBER OF PARKED    │
                │              │ VEHICLES FROM NECESSITY      │
                │              │ DETERMINATION MINIMUM        │
                │              │ THRESHOLD, -1 AND DEEM       │
                │              │ RESULT EVALUATION VALUE      │
                │              └─────────────────────────────┘
                ▼  S64                        │
   ╱ IS NUMBER HIGHER THAN   ╲    NO           │
  ╱  NECESSITY DETERMINATION  ╲────────┐        │
   ╲ MAXIMUM THRESHOLD?      ╱         │        │
    ╲───────────────────────╱         ▼  S65    │
  S66         │ YES       ┌─────────────────────────────┐
              │           │ DEEM AS THRESHOLD EVALUATION │
              ▼           │ VALUE THE RATIO OF DIFFERENCE│
  ┌─────────────────────┐ │ BETWEEN NUMBER OF PARKED CARS│
  │ DEEM AS EVALUATION   │ │ AND MINIMUM THRESHOLD TO     │
  │ VALUE THE DIFFERENCE │ │ DIFFERENCE BETWEEN MAXIMUM   │
  │ BETWEEN NUMBER OF    │ │ THRESHOLD AND MINIMUM        │
  │ PARKED CARS AND      │ └─────────────────────────────┘
  │ MAXIMUM THRESHOLD    │             │
  └─────────────────────┘              │
              │◄──────────────────────┘
   S67        ▼
   ╱ HAVE EVALUATION        ╲    YES
  ╱  VALUES BEEN CALCULATED  ╲──────────────┐
   ╲ FOR EVERY PORT?        ╱                │
    ╲───────────────────────╱                │
              │ NO                           ▼  S69
              ▼  S68           ┌─────────────────────────┐
  ┌─────────────────────┐      │   EXTRACT PORT FOR       │
  │  SPECIFY NEXT PORT   │      │ VEHICLE REDISTRIBUTION   │
  └─────────────────────┘      └─────────────────────────┘
                                          │
                                          ▼
                                   ┌──────────┐
                                   │  RETURN  │
                                   └──────────┘
```

Fig. 10

```
                    ┌─────────────────────┐
                    │   VEHICLE MOVEMENT   │
                    │  INSTRUCTION PROCESS │
                    └──────────┬──────────┘
                               ↓
                    ┌─────────────────────┐  S71
                    │ SELECT PORT WITH HIGHEST │
                    │    EVALUATION VALUE   │
                    └──────────┬──────────┘
```

S77

```
           NO    ╱ IS EVALUATION VALUE ╲   S72         ╱ ARE PERSONNEL ╲    NO              S78
        ┌───────<   A POSITIVE VALUE?   >           <   STATIONED AT    >────────┐
        │        ╲                     ╱             ╲ SELECTED PORT?  ╱          │
        ↓            │ YES                                 │ YES            ┌──────────────┐
   ┌─────────┐       │         S73                         │           S79  │ SELECT PORT WHICH│
   │ RETURN  │       ↓                                     ↓                │ PERSONNEL CAN REACH│
   └─────────┘  ╱ IS NUMBER OF ╲              ╱ ARE PERSONNEL ╲  NO         │ MOST QUICKLY │
        NO     ╱ VEHICLES ABOVE VEHICLE ╲   <  STATIONED AT    >────┐       └──────┬───────┘
   S74 ┌──────<  DEDUCTION THRESHOLD?  >   ╲ ONLY ONE PORT? ╱       │              │ S80
       │       ╲                     ╱      │ YES                   ↓       ┌──────────────┐
       ↓           │ YES                    │                ┌──────────────┤ SELECT PORT BASED ON│
 ┌─────────────┐   ↓          S75           │                │ PREDETERMINED ORDER│
 │ SELECT PORT WITH│ ╱ HAS ONLY ONE PORT ╲ NO                └──────┬───────┘
 │  NEXT HIGHEST  │<   BEEN SELECTED?    >──┘                       │
 │ EVALUATION VALUE│ ╲                  ╱                           │
 └─────────────┘      │ YES                                         │
                      ↓                                             ↓    S76
                                                          ┌──────────────┐
                                                          │ DETERMINE MOVEMENT│
                                                          │  SOURCE PORT  │
                                                          └──────┬───────┘
                                                                 ↓
                                                                (A)
```

EP 1 503 358 A1

Fig. 11

(A)

**S81** SELECT PORT WITH LOWEST EVALUATION VALUE

**S82** IS EVALUATION VALUE A NEGATIVE VALUE — NO

YES

**S83** IS NUMBER OF VEHICLES BELOW VEHICLE ADDITION THRESHOLD? — NO

**S84** SELECT PORT WITH NEXT LOWEST EVALUATION VALUE

YES

**S85** HAS ONLY ONE PORT BEEN SELECTED? — NO

**S87** SELECT PORT NEAREST MOVEMENT SOURCE PORT

YES

**S86** DETERMINE MOVEMENT TARGET PORT

**S88** ARE PERSONNEL STATIONED AT MOVEMENT SOURCE PORT? — NO

YES

**S89** ISSUE INSTRUCTION TO PERSONNEL AT PORT

**S90** ISSUE INSTRUCTION TO NEAREST PERSONNEL

RETURN

# Fig. 12

```
                    ┌─────────────────┐
                    │   RESERVATION   │
                    │     PROCESS     │
                    └────────┬────────┘
                             │
                    ┌────────┴────────┐
                    │  IDENTIFY USER, │─────── S101
                    │RECEIVE RESERVATION│
                    └────────┬────────┘
                             │        S102
                        ╱────┴────╲
                       ╱ VACANT    ╲     NO        ┌──────────────────────┐
                      ╱  VEHICLE IN  ╲────────────▶│ INFORM RESERVATION NG,│── S103
                      ╲ DEPARTURE PORT?╱           │RESERVATION CONFIRMATION│
                       ╲─────────────╱             │      PROCESSING 1      │
                             │ YES                 └───────────┬──────────┘
                             │                                 │
          S104 ──┌────────┴────────┐                           │
                 │  INPUT DESIRED  │                           │
                 │   USAGE TIME    │                           │
                 └────────┬────────┘                           │
                          │                                    │
          S105 ──    ╱────┴────╲                               │
                    ╱  VACANT    ╲    NO        ┌──────────────────────┐
                   ╱   VEHICLE    ╲────────────▶│ INFORM RESERVATION NG,│── S106
                   ╲   SECURED?   ╱             │RESERVATION CONFIRMATION│
                    ╲────────────╱              │      PROCESSING 2      │
                          │ YES                 └───────────┬──────────┘
     S107─┌──────────────┴──────────┐                       │
          │  REGISTER RESERVATION   │                       │
          │  TIME AND RESERVATION   │                       │
          │     CONDITIONS IN       │                       │
          │   RESERVATION MASTER    │                       │
          └──────────────┬──────────┘                       │
                         │                                  │
   S108─┌───────────────┴────┐                              │
        │   INFORM USER      │                              │
        │  RESERVATION OK    │                              │
        └───────────┬────────┘                              │
                    │◀──────────────────────────────────────┘
              ┌─────┴─────┐
              │    END    │
              └───────────┘
```

Fig. 13

```
    ┌─────────────────────────┐
    │ RESERVATION ACCEPTANCE  │
    │   CONTROL PROCESS       │
    └─────────────────────────┘
                │
                ▼                    S111
          ╱ ARE THERE ╲      NO
         ╱ UNRETURNED  ╲─────────┐
         ╲ VEHICLES?   ╱         │
          ╲_____╱          │
                │ YES            S112
                ▼                 │
    ┌─────────────────────┐      │
    │ LET NUMBER OF        │      │
    │ UNRETURNED           │      │
    │ VEHICLES = M         │      │
    └─────────────────────┘      │
                │                 │
    S113        ▼◄────────────────┘
          ╱ ARE THERE ╲      NO
         ╱ NEW VEHICLES ╲────────┐
         ╲ TO BE REPAIRED?╱      │
          ╲_____╱         │
    S114        │ YES            │
                ▼                │
    ┌─────────────────────┐      │
    │ LET NUMBER OF        │      │
    │ NEW VEHICLES TO      │      │
    │ BE REPAIRED = N      │      │
    └─────────────────────┘      │
                │                │
    S115        ▼◄───────────────┘
          ╱ ARE THERE ╲      NO
         ╱ RESTORED     ╲───────┐
         ╲ VEHICLES?    ╱       │
          ╲_____╱         │
    S116        │ YES           │
                ▼               │
    ┌─────────────────────┐     │
    │ LET NUMBER OF        │     │
    │ RESTORED             │     │
    │ VEHICLES = R         │     │
    └─────────────────────┘     │
    S117        │               │
                ▼◄──────────────┘
    ┌─────────────────────┐
    │ EFFECTIVE NUMBER     │
    │ OF VEHICLES "X=TOTAL │
    │ NUMBER OF SHARED     │
    │ VEHICLES A-(M+N)+R"  │
    └─────────────────────┘
```

```
                               S118
          ╱ ANY VARIATION ╲   NO
         ╱ IN M, N OR R?    ╲─────────┐
         ╲_____╱          │
                │ YES          S119   │
                ▼                     │
          ╱ HAS EFFECTIVE ╲    NO     │
         ╱ NUMBER OF VEHICLES╲────────┤
         ╲ X REDUCED?       ╱         │
          ╲_____╱           │
                │ YES          S120   │
                ▼                     │
    ┌─────────────────────┐           │
    │ STOP ACCEPTING       │          │
    │ NEW RESERVATION      │          │
    │ REQUESTS             │          │
    └─────────────────────┘          │
                │                     │
                ▼                     │
    ┌─────────────────────┐  S121     │
    │ PERFORM VEHICLE      │          │
    │ REDISTRIBUTION       │          │
    │ CALCULATION          │          │
    └─────────────────────┘          │
                │                     │
                ▼- - - - - - - - - -  │
          ╱ ARE THERE ╲     S122      │
         ╱ VEHICLES AVAILABLE╲  NO    │
         ╲ FOR LOAN?        ╱─────────┤
          ╲_____╱          │
                │ YES                 │
                ▼                     │
    ┌─────────────────────┐  S123     │
    │ RESUME ACCEPTING     │          │
    │ RESERVATION          │          │
    │ REQUESTS             │          │
    └─────────────────────┘          │
                │◄────────────────────┘
                ▼
          ┌───────────┐
          │    END    │
          └───────────┘
```

# Fig. 14

TIME 12:00　　　13:00　　　14:00　　　15:00　　　16:00　　　17:00

(1) SCHEDULED RETURN TIME
FOR PREVIOUS RESERVATION

VEHICLE NUMBER 1

VEHICLE NUMBER 2

(2) PERMITTED VEHICLE USAGE TIME

VEHICLE NUMBER 1

VEHICLE NUMBER 2

(3) VEHICLE RETURN TIME AND
PERMITTED RESERVATION TIME

VEHICLE NUMBER 1

VEHICLE NUMBER 2

(4) NUMBER OF VEHICLES AVAILABLE
FOR RESERVATION AFTER 14:00

PERIOD IN WHICH
VEHICLE RESERVATION
REQUESTS ARE NOT ACCEPTED

VEHICLE
RETURN
14:15

2 VEHICLES　　1 VEHICLE　　2 VEHICLES

WHEN DETERMINED THAT
ONE VEHICLE CAN NOT
BE RETURNED

EP 1 503 358 A1

# EP 1 503 358 A1

**European Patent Office**

## EUROPEAN SEARCH REPORT

Application Number

EP 04 02 5554

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | EP 0 997 861 A (HONDA MOTOR CO LTD) 3 May 2000 (2000-05-03) <br> * page 3, lines 24-40; figures 1,2 * <br> * page 4, lines 19-26; figures 2,5 * <br> * page 5, lines 13-31; figures 3,4 * <br> * page 7, columns 40-44 * <br> * page 9, columns 34-36 * | 1 | G08G1/123 <br> G06F17/60 |
| X | * page 8, lines 3-14,41-51; figures 5,10 * <br> * page 7, columns 1-34; figures 2,3,5 * <br> ----- | 2,3 | |
| A | JP 2002 150469 A (JLN:KK) 24 May 2002 (2002-05-24) <br> * abstract; figures 1,4,9,10 * <br> ----- | 1-3 | |
| A | DE 100 50 984 A (CSP CAMSOFT AG GES FUER SOFTWA) 2 May 2002 (2002-05-02) <br> * column 1, lines 47-62; figure 4 * <br> * column 4, lines 14-60 * <br> ----- | 1-3 | |
| A | US 2002/026337 A1 (SASAKI HIROSHI) 28 February 2002 (2002-02-28) <br> * page 7; claim 6; figures 1,7 * <br> ----- | 1-3 | **TECHNICAL FIELDS SEARCHED** (Int.Cl.7) <br> G08G <br> G06F |

The present search report has been drawn up for all claims

| Place of search | Date of completion of the search | Examiner |
|---|---|---|
| Munich | 8 December 2004 | Kanelis, K |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

38

**EP 1 503 358 A1**

## ANNEX TO THE EUROPEAN SEARCH REPORT
## ON EUROPEAN PATENT APPLICATION NO.

EP 04 02 5554

This annex lists the patent family members relating to the patent documents cited in the above-mentioned European search report.
The members are as contained in the European Patent Office EDP file on
The European Patent Office is in no way liable for these particulars which are merely given for the purpose of information.

08-12-2004

| Patent document cited in search report | | Publication date | Patent family member(s) | | Publication date |
|---|---|---|---|---|---|
| EP 0997861 | A | 03-05-2000 | JP | 2000132784 A | 12-05-2000 |
| | | | CN | 1252580 A ,C | 10-05-2000 |
| | | | DE | 69913466 D1 | 22-01-2004 |
| | | | DE | 69913466 T2 | 07-10-2004 |
| | | | EP | 0997861 A2 | 03-05-2000 |
| | | | ES | 2209309 T3 | 16-06-2004 |
| | | | TW | 451147 B | 21-08-2001 |
| | | | US | 6701300 B1 | 02-03-2004 |
| JP 2002150469 | A | 24-05-2002 | NONE | | |
| DE 10050984 | A | 02-05-2002 | DE | 10050984 A1 | 02-05-2002 |
| US 2002026337 | A1 | 28-02-2002 | JP | 2002063513 A | 28-02-2002 |

EPO FORM P0459

For more details about this annex : see Official Journal of the European Patent Office, No. 12/82